**Europäisches Patentamt**

(19) **European Patent Office**

**Office européen des brevets**

(11) **EP 1 162 452 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(21) Anmeldenummer: **99918390.8**

(22) Anmeldetag: **22.01.1999**

(51) Int Cl.$^7$: **G01N 25/18**

(86) Internationale Anmeldenummer:
**PCT/RU1999/000025**

(87) Internationale Veröffentlichungsnummer:
**WO 2000/043763 (27.07.2000 Gazette 2000/30)**

(54) **VERFAHREN ZUR ABSOLUTEN FESTSTELLUNG DER WÄRMELEITFÄHIGHEIT VON FESTSTOFFEN UND VORRICHTUNG ZU IHREM GEBRAUCH**

METHOD FOR THE EXPRESS DEFINITION OF THE THERMAL CONDUCTIVITY OF SOLID MATERIALS AND DEVICE FOR REALISING THE SAME

PROCEDE PERMETTANT DE DETERMINER DE MANIERE EXPRESSE LA CONDUCTIVITE THERMIQUE DE MATERIAUX SOLIDES ET DISPOSITIF DE MISE EN OEUVRE DE CE PROCEDE

(84) Benannte Vertragsstaaten:
**AT CH DE ES FR GB IT LI SE**

(43) Veröffentlichungstag der Anmeldung:
**12.12.2001 Patentblatt 2001/50**

(73) Patentinhaber: **Popov, Jury Anatolievich
Moscow, 117485 (RU)**

(72) Erfinder: **Popov, Jury Anatolievich
Moscow, 117485 (RU)**

(74) Vertreter: **Tergau, Dietrich, Dipl.-Ing.
Tergau & Pohl,
Patentanwälte,
Mögeldorfer Hauptstrasse 51
90482 Nürnberg (DE)**

(56) Entgegenhaltungen:
**DE-A1- 4 013 975     RU-C1- 2 011 977
SU-A- 1 032 382       US-A- 3 533 274
US-A- 5 441 343**

- **PATENT ABSTRACTS OF JAPAN vol. 009, no. 016 (P-329), 23. Januar 1985 (1985-01-23) & JP 59 163527 A (KOGYO GIJUTSUIN;OTHERS: 0J), 14. September 1984 (1984-09-14)**

**Beschreibung**

**GEBIET DER TECHNIK**

Die Erfindung. betrifft den wärmephysikalischen Gerätebau, insbesondere Verfahren zur Schnellbestimmung der Wärmeleitfähigkeit fester Substanzen und Vorrichtung zu deren Ausführung.

**STAND DER TECHNIK**

Es ist bereits ein Verfahren zur Bestimmung der Leitfähigkeit von Substanzen bekannt, welches ein Aufheizen der Oberfläche des zu testenden Musters mittels einer bewegbaren punktförmigen Heizquelle und eine Temperaturregistrierung an der Oberfläche des Musters längs der Verlagerungslinie der Heizquelle mit Hilfe eines Temperaturgebers, welcher sich bei einem fixierten Zurückbleiben hinter der Heizquelle bewegt, beinhaltet [Popow Ju.A. Einige Besonderheiten bei der Anwendung einer aktiven Wärmekontrollmethode. "Defektoskopia", 1975, Heft 2, S. 56].

Bei der Ausführung dieses Verfahrens wird die Suchgröße bei einem hohen Fehler ermitttelt, denn es sind keine optimalen Beziehungen hunsichtlich der Kenndaten der Heizquelle und des Temperaturgebers, des Abstandes dazwischen und deren Laufgeschwindigkeit definiert.

Es ist weiters ein Verfahren zur Schnellbestimmung der Leitfähigkeit fester Substanzen bekannt [RU. A., Nr. 1032382], welches ein Aufheizen der Oberfläche des zu testenden Musters und derselben des Vergleichsmusters während der Verlagerung einer Plattform mit den Mustern und einer Einheit zur Erhitzung der Muster und der Registrierung deren Temperatur mit einer Heizquelle und einem Temperaturgeber gegenübereinander umfaßt. Durch das Messen der Temperatur an der Oberfläche dieser Muster mittels des Temperaturgebers im Bereich der Temperaturregistrierung, welcher Bereich an der Verlagerungslinie des Heizfleckes hinter diesem angeordnet ist, ermittelt man überschüssige Grenztemperaturen des zu testenden Musters $T-T_0$ und des Vergleichsmusters $T_R-T_{R0}$, wobei T und $T_R$ - jeweils Grenztemperaturen des erhitzten, zu testenden Musters und des Vergleichsmusters, $T_0$ und $T_{R0}$ - Anfangstemperaturen des zu testenden Musters und des Vergleichsmusters bedeuten, und man errechnet die gesuchte Wärmeleitfähigkeit nach der Formel:

$$\lambda = \lambda_R \, (T_R - T_{R0}) \, / \, (T - T_0) \tag{1},$$

worin $\lambda_R$ - bekannte Größe der Leitfähigkeit des Vergleichsmusters bedeutet. Der Abstand $x_0$ zwischen dem Abschnitt für die Temperaturregistrierung und dem Mittelpunkt des Heizfleckes wird derart festgelegt, daß die Beziehung $x_0 > 5/K^{1/2}$ erfüllt wird, wobei K - Konzentrationskoeffizient der Quelle (des Heizfleckes) mit einer Abmessung in $m^2$ bedeutet, was dafür unternommen wird, um die Übertemperatur der Oberfläche des zu testenden Musters und des Vergleichsmusters im Bereich deren Regestrierung an die Übertemperatur, die sich bei der Erhitzung mit einer punktförmigen Quelle ergibt, anzupassen.

Die Auswahl des Abstandes $x_0$ für das Zurückbleiben des Bereiches der Oberfläche, in welchem die Temperaturregistrierung vorgenommen wird, hinter dem Heizfleck ausgehend von der Beziehung $x_0 > 5/K^{1/2}$ sichert keine Messung der Wärmeleitfähigkeit mit kontrollierbarer oder vorbestimmbarer Genauigkeit und kann unzulässig große Meßfehler bei präzisen Messungen zur Folge haben. Dies hängt damit zusammen, daß bei dieser Beziehung die Auswirkung der Laufgeschwindigkeit (der Abtastung) der Heizquelle und des Temperaturgebers, der Maße des Abschnittes für die Temperaturregistrierung und der Wärmeeigenschaften des zu erhitzenden Musters und des Vergleichsmusters nicht in Kauf genommen ist. Diese Beziehung gilt nicht, wenn die Form des Heizfleckes sich von der Kreisform unterscheidet und die Verteilung der spezifischen Leistung der Quelle auf dem Heizfleck mit dem Normalgesetz nicht übereinstimmt. Durch das Fehlen der Kriterien zur Auswahl der Abmessungen und der Form des Abschnittes für die Temperaturregistrierung an der Oberfläche der Vergleichsmuster und der zu testenden Muster sowie durch das Fehlen der Kriterien zur Auswahl der Abtastgeschwindigkeit und des Vergleichsmusters ergeben sich ebenfalls große Meßfehler beim Messen der Wärmeleitfähigkeit. Das Fehlen von Kriterien zur Auswahl von günstigen Parametern für die Messungen in ihrer gegenseitigen Beziehung (Maße des Heizfleckes und des Abschnittes für die Temperaturregistrierung, Abstand $x_0$ für das Zurückbleiben des Mittelpunktes des Abschnittes für die Temperaturregistrierung hinter dem Mittelpunkt des Heizfleckes, Abtastgeschwindigkeit, Anfangstemperaturen der Etalone und der zu testenden Muster, Leistung der Heizquelle), sowie von Kriterien zur Bewertung der zulässigen Anfangstemperaturhöhen des Vergleichs- und des testenden Musters und von Kriterien zur Auswahl eines Verhältnisses zwischen der Leitfähiget des Vergleichsmusters und derselben des zu testenden Musters verschlechtert auch die Meßgenauigkeit. Hinzu kommt, daß bei der Registrierung der Anfangstemperatur und der Temperatur der erhitzten Oberflächen von Mustern mit Hilfe zweier Temperaturgeber, ohne daß deren Signale in bezug auf die Zeit aneinander angepaßt worden sind, weitere Meßfehler für Muster mit der sich entlang der Oberfläche ändernden Anfangstemperatur oder beim Übergang während der Abtastung von einem Muster zu einem anderen auftreten können, was darauf zurückzuführen ist, daß die Geber voneinander entlang der Abtastlinie beabstandet sind und die Temperatur veraschiedener Oberflächenteile oder gar verschiedener Muster registrieren.

Das bekannte Verfahren wird durch eine Vorrichtung [Popow Ju.a., Semjonow W.G, Korosteljow W.M., Berjosin W.W. Die berührungslose Ermittlung der Wärmeleitfähigkeit von Gesteinen mit Hilfe einer bewegbaren Heizquelle. Physik der Erde, 1983, Nr. 7, S. 86 bis 93] mit einer Plattform zur Aufnahme von zu testenden Mustern und Vergleichsmustern und einer Heiz-Registriereinheit, bestehend aus einem Temperaturgeber und einer Heizquelle zum Aufheizen von Mustern in Form einer Lampe, eines Lasers oder einer konvektiven Heizquelle realisiert, wobei der Temperaturgeber derart angeordnet ist, daß der Mittelpunkt des Abschnittes der Oberfläche des Musters, in dem die Temperaturregistrierung vorgenommen wird, an der Bewegungslinie des Mittelpunktes des Heizfleckes bei einem Abstand des Zurückbleibens $x_0 > 5/K^{1/2}$ zu liegen kommt.

Die bekannte Vorrichtung ist ebenfalls mit den vorstehend erwähnten Nachteilen des Verfahrens behaftet. Darüber hinaus zeichnet sich die Vorrichtung durch einen beträchtlichen Zeitaufwand und kompliziertere Meßvorgänge aus, was damit verbunden ist, daß bei jeder Messung Vergleichsmuster benutzt werden.

## OFFENBARUNG DER ERFINDUNG

Technische Aufgabe der vorliegenden Erfindung ist es, ein Verfahren und eine Vorrichtung zur Schnellbestimmung der Wärmeleitfähigkeit fester Substanzen zu schaffen, bei denen durch die Auswahl der besten gegenseitigen Kombination der Parameter des Meßverfahrens einschl. der Maße des Heizfleckes und des Abschnittes für die Temperaturregistrierung, des Abstandes für das Zurückbleiben des Mittelpunktes des Abschnittes für die Temperaturregistrierung hinter dem Mittelpunkt des Heizfleckes, der Abtastgeschwindigkeit, der Leistung der Heizquelle, des Abstandes zwischen den Linien an der Oberfläche der Muster, welchen entlang sich die Mittelpunkte des Heizfleckes und des Abschnittes für die Temperaturregistrierung an der Oberfläche der Muster bewegen, die Meßgenauigkeit der Wärmeleitfähigkeit verbessert und eine ausführliche Registrierung der Verteilung der Wärmeleitfähigkeit in jedem heterogenen Muster sichergestellt wird.

Das angegebene technische Ergebnis ist mittels des Verfahrens des Anspruchs 1 dadurch erreichbar, daß bei dem bekannten Verfahren zur Bestimmung der Wärmeleitfähigkeit, welches eine vorbereitende Einstellung der Vorrichtung auf die Messungen, ein Aufheizen der Oberflächen der zu testenden Muster unter Verlagerung der Plattform mit den zu testenden Mustern und der Einheit für das Aufheizen und die Temperaturregistrierung der zu testenden Muster gegenübereinander, eine Bestimmung der überschüssigen Grenztemperaturen an der Oberfläche der zu testenden Muster an der Verlagerungslinie des Abschnittes für die Temperaturregistrierung an der Oberfläche der zu testenden Muster und eine Ermittlung der Wärmeleitfähigkeit der zu testenden Muster nach der Formel $\lambda = \lambda_R (T_R - T_{R0}) / (T - T_0)$ oder $\lambda = \lambda_R (U_R - U_{R0})/(U - U_0)$ (2), wobei $\lambda$ - Wärmeleitfähigkeit des zu testenden Musters, $\lambda_R$ - Wärmeleitfähigkeit des Vergleichsmusters, $T$ und $T_R$ - überschüssige Grenztemperaturen des zu testenden Musters und des Vergleichsmusters, $T_0$ und $T_{R0}$ - Anfangstemperaturen des zu testenden Musters und des Vergelichsmusters, $U_R$ und $U$ - elektrische Signalwerte des Temperaturgebers, die den Erhitzungstemperaturen jeweils des Vergleichs- und des zu testenden Musters zugeordnet sind, $U_{R0}$ und $U_0$ - elektrische Signalwerte des Temperaturgebers, die den Anfangstemperaturen jeweils des Vergleichs- und des zu testenden Musters zugeordnet sind, bedeuten, beinhaltet, wobei während der vorbereitenden Einstellung der Vorrichtung auf die Messungen die Breite L in einem Bereich zwischen deren Mindest- und deren Höchstwert $L_1$ und $L_2$, die innerhalb von $0,01 < L_1/L_2 < 1$ ausgewählt werden, definiert wird, und die Breite $L_2$ kleiner als der Abstand $x_0$ zwischen dem Mittelpunkt des Abschnittes für die Temperaturregistrierung und dem Mittelpunkt des Heizfleckes ausgewählt wird und die Breite 1 des Abschnittes für die Temperaturregistrierung in einem Bereich zwischen deren Mindest- und deren Größtwert, die innerhalb von $0,001 < l_1/l_2 < 1$ ausgewählt werden, definiert wird, die Breite $l_2$ kleiner als der Abstand $x_0$ zwischen dem Mittelpunkt des Abschnittes für die Temperaturregistrierung und dem Mittelpunkt des Heizfleckes ausgewählt wird, wobei innerhalb der Breite L des Heizfleckes mehr als 60 % Nutzleistung der Heizquelle in Anspruch genommen werden, während innerhalb der Breite 1 des Abschnittes für die Temperaturregistrierung mehr als 60 % Nutzsignal des Temperaturgebers 12 konzentriert werden, und eine gegenseitige Verschiebung der Linien bewirkt wird, welchen entlang sich an den Oberflächen der Muster der Heizfleck und der Abschnitt für die Temperaturregistrierung bewegen, indem ein günstiger Abstand dazwischen so lange ausgewählt wird, bis eine minimale Auswirkung der Form des Heizfleckes und des Abschnittes für die Temperaturregistrierung auf die Meßergebnisse der Wärmeleitfähigkeit erreicht wird.

Es wird vorteilhaft während der vorbereitenden Einstellung der Vorrichtung auf die Messungen ein Satz von Vergleichsmustern mit verschiedenen bekannten Wärme- und Temperaturleitfähigkeitswerten ausgebildet, deren Bereich ausgehend von vermutlichen Bereichen der Wärme- und Temperaturleitfähigkeit der zu erforschenden Muster ausgewählt wird, wobei man die Erhitzungshöhen der Vergleichsmuster bestimmt und später sich der Angaben zur Erhitzungshöhe der Vergleichsmuster bei der Ermittlung der Wärmeleitfähigkeit der zu testenden Muster bedient.

Es ist auch möglich, daß im Laufe der vorbereitenden Einstellung der Vorrichtung auf die Messungen ein Satz von Vergleichsmustern mit verschiedenen bekannten Wärme- und Temperaturleitfähigkeitswerten gebildet wird, deren Bereich ausgehend von vermutlichen Bereichen der Wärme- und Temperaturleitfähigkeit der zu testenden Muster ausgewählt wird. Später, wenn die Wärmeleitfähigkeit der zu testenden Muster bestimmt wird, ermittelt man die Erhitzungshöhen der Vergleichsmuster und bedient sich der Angaben zur Erhitzungshöhe der Vergleichsmuster bei der Ermittlung der Wärmeleitfähigkeit der zu testenden Muster.

Im Laufe der vorbereitenden Einstellung der Vorrichtung auf die Messungen werden weiters Vergleichsmessungen der Wärmeleitfähigkeit bei Anwendung von Vergleichsmustern mit gleicher oder angenäherter Wärmeleitfähigkeit, die sich jedoch in bezug auf die Temperaturleitfähigkeit im wesentlichen voneinander unterscheiden, durchgeführt, und mit Blick auf die Auswirkung der Temperaturleitfähigkeit auf die Meßergebnisse verändert man die Parameter des Meßverfahrens der Wärmeleitfähigkeit, indem man die geringste Beeinflussung der Meßergebnisse der Wärmeleitfähigkeit durch die Temperaturleitfähigkeit anstrebt und somit optimale Kenndaten für den Betrieb der Vorrichtung definiert.

Das technische Ergebnis wird ferner durch den Einsatz einer Vorrichtung zur Schnellbestimmung der Leitfähigkeit fester Substanzen gemäß der Erfindung, wie im Anspruch 5 definiert ist, erzielt, welche Vorrichtung eine Plattform zur Aufnahme von zu testenden Mustern und Vergleichsmustern, eine Heiz- und Registriereinheit, bestehend aus einer Heizquelle zum Aufheizen von Mustern und einem Temperaturgeber, aufweist, wobei die Plattform mit den Mustern und die Heiz- und Registriereinheit bewegbar gegenübereinander angeordnet sind, die Heizquelle bzw. die Formierungseinrichtung zum Formieren eines Heizfleckes und der Temperaturgeber bzw. ein Element der optischen Verbindung so angeordnet sind, daß sie sich hintereinander längs der Verlagerungslinie des Abschittes für die Temperaturregistrierung an der Oberfläche der Muster bewegen können, dadurch gekennzeichnet, daß die Heiz- und Registriereinheit eine Formierungseinrichtung zum Formieren eines Heizfleckes und/oder ein Element der optischen Verbindung aufweist, wobei innerhalb der Heizund Registriereinheit die Heizquelle bzw. die Formierungseinrichtung zum Formieren des Heizfleckes und der Temperaturgeber bzw. das Element der optischen Verbindung von der Oberfläche der Muster so beabstandet und unter solch einem Winkel zur Oberfläche der Muster eingestellt ist und die Bestrahlung der Muster durch die Heizquelle sowie die Bestrahlung des Temperaturgebers durch die Muster nach der Fläche und der Form so fokussiert oder eingeschränkt ist, daß die Breite L des Heizfleckes in einem Bereich zwischen deren Mindest- und deren Größtwert $L_1$ und $L_2$, die innerhalb von $0,01 < L_1/L_2 < 1$ ausgewählt sind, erreicht wurde und die Breite $L_2$ kleiner als der Abstand $x_0$ zwischen dem Mittelpunkt des Abschnittes für die Temperaturregistrierung und dem Mittelpunkt des Heizfleckes ausgewählt wurde, die Breite 1 des Abschnittes für die Temperaturregistrierung in einem Bereich zwischen deren Mindest- und deren Größtwert $l_1$ und $l_2$, die innerhalb von $0,001 < l_1/l_2 < 1$ ausgewählt wurde, erreicht wurde, wobei die Breite $l_2$ kleiner als der Abstand $x_0$ zwischen dem Mittelpunkt des Abschnittes für die Temperaturregistrioerung und dem Mittelpunkt des Heizfleckes ausgewählt wurde, wobei innerhalb der Breite L des Heizfleckes mehr als 60 % Nutzleistung der Heizquelle in Anspruch genommen werden, während innerhalb der Breite 1 des Abschnittes für die Temperaturregistrierung mehr als 60 % Nutzsignal des Temperaturgebers konzentriert werden, die Konstruktionsabmessungen der Heiz- und Registriereinheit davon ausgehend festgelegt sind, daß der Abstand $x_0$ zwischen dem Mittelpunkt des Abschnittes für die Temperaturregistrierung und dem Mittelpunkt des Heizfleckes in bezug auf die Mindestlänge $l_{0min}$ des zu testenden Musters und des Vergleichsmusters innerhalb von $(d_1/2 + d_2/2) < x_0 < 2l_{0min}$, wobei $d_1$ - Länge des Heizfleckes längs der Lauflinie, $d_2$ - Länge des Abschnittes für die Temperaturregistrierung längs der Lauflinie bedeutet, $l_{0min}$ = 1 bis 2000 mm, ausgewählt wurde, wobei zur Sicherung der gewünschten Qualität der Ergebnisse die Geschwindigkeit der relativen Bewegung der Muster von 0,1 bis 300 mm/s, die Länge $d_1$ des Heizfleckes ausgehend von der Beziehung $d_1 < l_{min}$ und die Länge $d_2$ des Abschnittes für die Temperaturregistrierung ausgehend von der Beziehung $d_2 < l_{min}$ ausgewählt wurden.

Die Vorrichtung umfaßt weiterhin einen Satz von Vergleichsmustern mit verschiedenen Wärme- und Temperaturleitfähigkeitswerten, deren Bereich ausgehend von vermutlichen Bereichen der Wärme- und Temperaturleitfähigkeit der zu testenden Muster derart ausgewählt wird, daß sich der Bereich der Wärmeleitfähigkeit und der der Temperaturleitfähigkeit decken oder einander nahekommen.

Die Vorrichtung läßt sich so aufbauen, daß zwischen den Mustern und der Plattform wärmedämmende Einlagen vorgesehen sind oder die Plattform aus einem wärmedämmenden Werkstoff besteht.

Erfindungsgemäß kann die Vorrichtung so ausgestaltet werden, daß die Heizund Registriereinheit einen weiteren Temperaturgeber und/oder ein weiteres Element der optischen Verbindung zwischen dem Temperaturgeber und der Oberfläche der Muster sowie eine Signalzeitverzögerungseinheit zur Verzögerung des Signals, das der Anfangstemperatur der Muster zugeordnet ist, in bezug auf das Signal, das der Temperatur der erhitzten Oberfläche der Muster zugeordnet ist, aufweist, wobei die Heizquelle oder die Formierungseinrichtung zum Formieren des Heizfleckes in der Heiz- und Registriereinheit zwischen dem hauptsächlichen und dem zusätzlichen Temperaturgeber oder zwischen dem hauptsächlichen und dem zusätzlichen Element der optischen Verbindung angeortdnet sind und die Signalverzögerungszeit der Signalzeitverzögerungseinheit gleich S/v ist, wo S - Abstand zwischen den Mittelpunkten der Abschnitte für die Registrierung der Anfangstemperatur und der Temperatur der erhitzten Oberfläche der Muster, v - Laufgeschwindigkeit der Heizund Registriereinheit bezüglich der Muster bedeutet.

Die Plattform wird vorzugsweise als Zweikoordinatentisch ausgebildet, der in beiderseitig senkrechten Richtungen bewegbar ist.

Die Plattform kann über einen Mechanismus für deren Verlagerung in Längsrichtung verfügen, während die Heiz- und Registriereinheit an einem Wagen angebracht ist, der auf einem Rahmen angeordnet ist, der in Querrichtung bezüglich der Plattform bewegbar ist.

Die Plattform kann einen Mechanismus für deren Verlagerung in Querrichtung aufweisen, während die Heiz- und Registriereinheit an einem auf einem Rahmen angeordneten Wagen befestigt ist, wobei der Rahmen so ausgebildet ist, daß sich der Wagen in Längsrichtung dem Rahmen entlang bewegen kann.

Die Vorrichtung ist möglicherweise so ausgeführt, daß bei einer ortsfesten Plattform die Heiz- und Registriereinheit an einem Wagen befestigt ist, der auf einem Rahmen so angeordnet ist, daß er sich in Längsrichtung dem Rahmen entlang bewegen kann, welcher Rahmen sich an Führungen in Querrichtung zur Plattform verlagern kann.

Es ist weiter vorgesehen, daß die Heiz- und Registriereinheit um eine zur erwärmten Oberfläche der Muster senkrecht verlaufende Achse drehbar angeordnet ist.

Die Vorrichtung wird so ausgeführt, daß die Formierungseinrichtung zum Formieren des Heizfleckes und/oder die Elemente der optischen Verbindung der Temperaturgeber mit der Oberfläche der Muster ein Lichtleiter und/oder eine Linse und/oder ein schwenkbarer Spiegel und/oder ein Prisma sind.

Es ist auch eine Bauart der Vorrichtung möglich, bei welcher die Heiz- und Registriereinheit so ausgeführt ist, daß sie eine Oszillation um eine Achse herum ausführen kann, die zur Oberfläche der Plattform parallel und zu einer Ebene, die die Linie mit daran angeordneten Mustern zenkrecht zur Oberfläche der Plattform durchläuft, senkrecht verläuft.

Die Vorrichtung kann aber auch so ausgestaltet werden, daß bei der Unterbringung der Heizquelle oder der Formierungseinrichtung zum Formieren des Heizfleckes und des Temperaturgebers oder der beiden Temperaturgeber oder der Elemente der optischen Verbindung in der Heiz- und Registriereinheit sie alle gemeinsam und/oder im einzelnen so ausgeführt sind, daß sie eine synchrone Oszillation unter Sicherung konstanter Abstände zwischen dem Mittelpunkt des Heizfleckes und den Mittelpunkten der Abschnitte für die Temperaturregistrierung ausführen können.

Die Plattform kann in Form eines Laufrades ausgebildet werden, das bezüglich der Heiz- und Registriereinheit umläuft, wobei die zu testenden Muster und die Vergleichsmuster sowie die Heiz- und Registriereinheit sowohl an der Außenseite des Laufrades als auch in dessen Innern angeordnet werden können.

Die Plattform kann als geschlossenes Band ausgeführt werden, das sich bezüglich der Heiz- und Registriereinheit dreht.

Möglich ist fernerhin die Bauform der Vorrichtung, bei welcher diese mit einer Ausgangsdatenspeichereinheit versehen ist, die eine Information über den Parameter $q/(2\pi x_0)$, wo q - Nutzleistung der Heizquelle, $x_0$ - Abstand zwischen dem Mittelpunkt des Abschnittes für die Temperaturregistrierung und dem Mittelpunkt des Heizfleckes bedeutet, oder über den Erhitzungsgrad der Vergleichsmuster, die bei der vorbereitenden Einstellung der Vorrichtung auf die Messungen definiert wurden, enthält und die mit der Heiz- und Registriereinheit elektrisch gekoppelt ist.

## KURZE BESCHREIBUNG DER ZEICHNUNGEN

Im folgenden wird die Erfindung anhand ihrer konkreten Ausführungsbeispiele und der beigefügten Zeichnungen näher erläutert, in denen zeigt :

Fig. 1 ein Wirkungsschema einer Vorrichtung zur Schnellbestimmung der Wärmeleitfähigkeit fester Substanzen ;

Fig. 2 eine Draufsicht eines Meßblockes ;

Fig. 3 eine Ansicht eines Meßblockes der Vorrichtung, in welchem die Heizund Registriereinheit um eine zur Oberfläche der Plattform senkrecht verlaufende Achse drehbar angeordnet ist (eine Seitenansicht);

Fig. 4 eine Vorrichtung mit einer ortsfesten Plattform und eine in zwei wechselseitig senkrechten Richtungen bewegbare Heiz- und Registriereinheit, eine Draufsicht ;

Fig. 5 dito wie in Fig. 4, eine Ansicht gemäß Pfeil A ;

Fig. 6 eine Ausführungsform der Plattform als Laufrad (in einem Schnitt gezeigt), welches sich bezüglich der Heiz- und Registriereinheit dreht, die genauso wie Muster im Innern des Laufrades weilt;

Fig. 7 eine Ausführungsform der Plattform als geschlossenes Band, das sich bezüglich der Heiz- und Registriereinheit dreht;

Fig. 8 eine Heiz- und Registriereinheit mit zwei Temperaturgebern ;

Fig. 9 einen Meßblock mit einer Formierungseinrichtung zum Formieren eines Heizfleckes und Elementen der optischen Verbindung der Temperaturgeber mit der Oberfläche der Muster.

## BESTE AUSFÜHRUNGSFORM DER ERFINDUNG

Das Verfahren wird wie folgt ausgeführt. Man bestimmt (beispielsweise ausgehend von den vorliegenden Angaben, mit Hilfe eines Nachschlagebuches oder durch probeweise angenäherte Messungen) einen eventuellen Bereich der Temperaturleitfähigkeit der zu testenden Muster. Danach, wenn der Heizfleck eine runde Form hat, das normale Gesetz für die Verteilung der Nutzleistungsdichte (d. h. tatsächlich durch das zu erhitzende Muster absorbierte Leistung) der Heizquelle auf dem Heizfleck gilt, der Abschnitt für die Temperaturregistrierung an der Oberfläche der Muster eine rechteckige Form hat und der Meßfehler $\delta\lambda$ der Wärmeleitfähigkeit in Betracht gezogen wird, definiert man den Koeffizienten K für die Konzentrierung der Heizquelle und die Abmessungen b, c der Stelle für die Temperaturregistrierung, wählt die Abtasrgeschwindigkeit v der Heizquelle und des Temperaturgebers, den Abstand $x_0$ zwischen dem Mittelpunkt des Abschnittes für die Temperaturregistrierung und dem Mittelpunkt des Heizfleckes, den zulässigen Bereich der Anfangstemperaturen des Vergleichsmusters und der zu testenden Muster und ein Vergleichsmuster mit einer Wärmeleitfähigkeit $\alpha_R$ so aus, daß die Beziehung erfüllt wird :

$$\delta\lambda \geq \left| \left(\frac{a}{a_R}\right)^{1/2} \cdot \exp\left[-\frac{vx}{2}\left(\frac{1}{a_R}-\frac{1}{a}\right)\right]\left(\frac{\dot{T}_{0R}}{T_0}\right)^{n-1} \right. \times$$

$$\times \frac{\displaystyle\int_{x_0-\frac{b}{2}}^{x_0+\frac{b}{2}}\int_{-\frac{c}{2}}^{\frac{c}{2}}\int_0^{\tau}\frac{1}{\sqrt{t(t_{0R}+t)}}\exp\left[-\frac{x^2+y^2}{4a_R(t_{0R}+t)}-\frac{v^2}{4a_R}(t_{uR}+t)\right]\cdot dx\cdot dy\cdot dt}{\displaystyle\int_{x_0-\frac{b}{2}}^{x_0+\frac{b}{2}}\int_{-\frac{c}{2}}^{\frac{c}{2}}\int_0^{\tau}\frac{1}{\sqrt{t(t_0+t)}}\exp\left[-\frac{x^2+y^2}{4a(t_0+t)}-\frac{v^2}{4a}(t_0+t)\right]dx\cdot dy\cdot dt} \left. -1\right|, \qquad (3)$$

wobei n - Index der Umwandlung der Temperatur in ein registrierbares Signal, $t_0 = 1 / (4aK)$, $t_{0R} = 1 / (4a_RK)$, a - Temperaturleitfähigkeit des zu testenden Musters im eventuellen Bereich deren Werte, t - Integrationsvariable, $\tau$ - Zeit, die für die Erreichung der Grenzerhitzungstemperatur des zu testenden Musters und des Vergleichsmusters, x, y - räumliche Koordinaten - Integrationsvariablen bedeuten.

Ein Vergleichsmuster mit geforderten Eigenschaften wird im vorliegenden Satz ausgewählt. Nachher ordnet man nacheinander auf einer besonderen Plattform das Vergleichsmuster und ein oder mehrere zu untersuchende Muster an, welche zuvor den Bedingungen ausgesetzt wurden, durch welche der festgestellte Bereich deren Anfangstemperaturen sichergestellt wurde. Die Heizquelle für das Aufheizen der Oberfläche der Muster und der Temperaturgeber werden vor den Mustern (für den Fall, daß ein Temperaturkontaktgeber, wie etwa ein Thermopaar, zum Einsatz gelangt, wird dieser Geber im Laufe der Messungen mit der Oberfläche der Muster in Berührung gebracht) so angeordnet, daß sich während der Abtastung längs den Oberflächen der zu untersuchenden Muster und der Vergleichsmuster der Mittelpunkt des Heizfleckes und solcher der Stelle für die Temperaturregistrierung entlang einer gemeinsamen Linie bewegen. Möglich ist aber auch die Anordnung der Heizquelle und der Temperaturgeber unter- oder oberhalb der Muster je nach der Orientierung der zu erhitzenden Oberfläche. Danach mißt man die Anfangstemperaturen $T_{R0}$ und $R_0$ jeweils des Vergleichsmusters und des zu testenden Musters. Die Anfangstemperaturen lassen sich beispielsweise dadurch ermitteln, daß nur der Temperaturgeber längs den Oberflächen der erwähnten Muster verlagert oder ein gesonderter Anfangstemperaturgeber eingesetzt wird, der der Heizquelle vorgeschaltet und gemeinsam mit der Heizquelle und dem Temperaturgeber im Meßvorgang verschoben wird. Nachher werden die Heizquelle mit konstanter Leistung und der Temperaturgeber, der mit der Heizquelle fest verbunden ist und daher einen unveränderlichen Nacheilabstand aufweist, mit konstanter Geschwindigkeit längs den Oberflächen des Vergleichsmusters und der zu testenden Muster verlagert. Während der Erhitzung wird die Grenztemperatur $T_R$ und T der zu erwärmenden Oberfläche jeweils des Vergleichsmusters und jedes zu testenden Musters entlang der Bewegungslinie der Heizquelle registriert. Danach bestimmt man ausgehend von der Differenz zwischen der Grenzerhitzungstemperatur und der zuvor gemessenen Anfangstemperatur die überschüssigen Grenztemperaturen, während die Wärmeleitfähigkeit jedes der zu testenden Muster gemäß der Formel $\lambda = \lambda_R (T_R-T_{R0}) / (T-T_0)$ bzw. $\lambda = \lambda_R (U_R-U_{R0}) / (U-U_0)$ (2) errechnet wird, wobei $\lambda$ - Wärmeleitfähigkeit des zu testenden Musters, $\lambda_R$ - Wärmeleitfähigkeit des Vergleichsmusters, T und $T_R$ - überschüssige Grenztemperaturen des zu testenden Musters und des Vergleichsmusters, $T_0$ und $T_{R0}$ - Anfangstempera-

turen des zu testenden Musters und des Vergleichsmusters, $U_R$ und U - elektrische Signalwerte des Temperaturgebers, die den Erhitzungstemperaturen jeweil des Vergleichs- und des zu testenden Musters zugeordnet sind, $U_{R0}$ und $U_0$ - elektrische Signalwerte des Temperaturgebers, die den Anfangstemperaturen jeweils des Versuchs- und des zu testenden Musters zugerodnet sind, bedeuten.

Der Satz der Vergleichsmuster mit verschiedenen bekannten Wärme- und Temperaturleitfähigkeitswerten wird ausgehend von den vermutlichen Bereichen der Wärme- und Temperaturleitfähigkeitswerten für die zu testenden Muster so zusammengefaßt, daß sich die Bereiche der Wärme- und der Temperaturleitfähigkeit der zu testenden Muster und der Vergleichsmuster decken oder einander nahekommen.

Die Messungen können so vorgenommen werden, daß die Erhitzungshöhe jedes Vergleichsmusters, die als überschüssige Grenzerhitzungstemperatur $T_R$-$T_{R0}$ oder als dieser entsprechende Spannungsdifferenz $U_R$-$U_{R0}$ definiert wird, von vornherein während der vorbereitenden Einstellung der Vorrichtung auf die Messungen ermittelt wird. Ferner, indem die Nutzleistung q der Heizquelle, der Abstand $x_0$ zwischen dem Mittelpunkt des Abschnittes für die Temperaturregistrierung und dem Mittelpunkt des Heizfleckes und andere Parameter des Meßverfahrens unverändert gehalten werden, bestimmt man bei den Messungen der Wärmeleitfähigkeit der zu testenden Muster lediglich überschüssige Grenzerhitzungstemperaturen T-$T_0$ der zu testenden Muster oder diesen entsprechende Spannungsdifferenzen U-$U_0$, wonach die Wärmeleitfähigkeit der zu testenden Muster nach einer der Formeln (2) ermittelt wird, indem man sich der vorher bestimmten Angaben zur Erhitzungshöhe der Vergleichsmuster bedient. Die Auswahl eines Vergleichsmusters und die Bestimmung optimaler Parameter des Meßverfahrens werden gleicherweise sowohl bei der Ermittlung der Erhitzungshöhe der Vergleichsmuster während der vorbereitenden Einstellung der Vorrichtung auf die Messungen, als auch bei der Ermittlung dieser Erhitzungshöhe gemeinsam mit der Erhitzungshöhe der zu testenden Muster im Falle einer nacheinanderfolgenden Erhitzung der zu testenden Muster und der Vergleichsmuster unter deren gleichzeitiger Unterbringung als einheitliche Serie auf der Plattform vorgenommen.

Die Beziehung (3) läßt sich wie folgt begründen :

In Wirklichkeit bedient man sich bei Messungen der Wärmeleitfähigkeit der folgenden der Beziehungen (2), die sich aus der Formel (1) ergeben :

$$\lambda=\lambda_R\,(T_R\text{-}T_{R0})\,/\,(T\text{-}T_0) = \lambda_R\,(U_R\text{-}U_{R0})\,/\,(U\text{-}U_0) \qquad (4).$$

Bei der Registrierung der Anfangstemperatur $T_0$ im elementaren Abschnitt dx.dy der Oberfläche des zu testenden Musters oder des Vergleichsmusters ergibt sich das zu registrierende elektrische Signal $dU_0$ aus der Beziehung :

$$dU_0 = CT_0^{\;n}\,dz.dy+ B \qquad (5),$$

wobei B, C, n - Konstanten sind, die von den Daten eines konkreten Meßgerätes abhängig sind, $T_0$ absolute Temperatur in Kelvin ist.

Bei der Temperaturregistrierung der erhitzten Körper $T_0 + \Theta$, wo $\Theta$ - überschüssige Grenztemperatur bedeutet, errechnet sich eine Änderung des im elementaren Abschnitt dx.dy registrierbaren Signals aus der Beziehung :

$$dU\text{-}dU_0 = C\,(T_0 + \Theta)^{n}\,dx.dy - CT_0^{\;n}\,dx.dy \qquad (6).$$

Dadurch, daß unter realen Bedingungen die Beziehung $\Theta \ll T_0$ gilt, so ergibt sich aus (6):

$$d(U - U_0) = Cn(T_0)^{n-1}\theta.dx.dy. \qquad (7)$$

Somit beträgt der volle Zuwachs des von der Stelle der Temperaturregistrierung kommenden Signals U-$U_0$, welche Stelle lineare Maße b, c aufweist, bei der Temperaturänderung von $T_0$ bis $T_0 + \theta$ :

$$U - U_0 = Cn\, T_0^{n-1} \int_{x_0 - \frac{b}{2}}^{x_0 + \frac{b}{2}} \int_{-\frac{c}{2}}^{\frac{c}{2}} \theta \, dx \cdot dy, \qquad (8)$$

wo statt $\Theta$ bei Anwendung der Angaben aus der Arbeit (Rykalin N.N. Berechnung von Wärmevorgängen beim Schweißen. Moskau, Verl. Maschgis, 1951, S. 167)

$$\theta = \frac{q}{4\lambda\left(\pi^3 a\right)^{1/2}} \exp\left(-\frac{vx}{2a}\right) \int_0^r \frac{1}{\sqrt{t \cdot (t_0 + t)}} \exp\left[-\frac{x^2 + y^2}{4a(t_0 + t)} - \frac{v^2}{4a}(t_0 + t)\right] dt, \quad (9)$$

wobei q - Nutzleistung der Wärmeenergiequelle bedeutet, eingesetzt werden kann.

In ähnlicher Weise wird die Größe $U_R - U_{R0}$ für das Vergleichsmuster ermittelt, die als Beziehung, die mit der Beziehung (8) übereinstimmt, unter Beachtung des Ausdruckes (9) und beim Einsetzen der Parameter des Vergleichsmusters $T_{R0}$, $\lambda_R$, $\alpha_R$ statt der entsprechenden Parameter des zu testenden Musters geschrieben werden kann.

Der relative systematische Meßfehler der Wärmeleitfähigkeit $\delta\lambda$ errechnet sich aus der Beziehung

$$\delta\lambda = \left|\frac{\lambda' - \lambda}{\lambda}\right|, \qquad (10),$$

wobei $\lambda'$ - Ist-Meßergebnis der Wärmeleitfähigkeit, $\lambda$ - tatsächliche Wärmeleitfähigkeit des Musters bedeutet. Durch das Einsetzen von

$$\lambda' = \lambda_R \frac{U_R - U_{R0}}{U - U_0}, \qquad (11)$$

in (10), statt $\lambda'$ gemäß (4) und von

$$\lambda = \lambda_R \frac{T_R - T_{R0}}{T - T_0}, \qquad (12)$$

statt $\lambda$ gemäß [RU.A., Nr. 1032382],
wo gemäß [RU. A., Nr. 1032382]

$$T_R - T_{R0} = q/(2\pi\lambda_R x_0), \qquad (13)$$

$$T - T_0 = q/(2\pi\lambda_R x_0), \qquad (14),$$

indem $U_R - U_{R0}$ und $U - U_0$ durch den Ausdruck (8) unter Benutzung von (9) substituiert werden, erhält man gemäß (10) die Beziehung (3).

Bei einer freien Verteilung der Nutzleistungsdichte auf dem Heizfleck, einer willkürlichen Form des Heizfleckes und des Abschnittes der Temperaturregistrierung an der Oberfläche der Muster können die übergroße Breite des Heizfleckes, d. h. die Größe des Heizfleckes in zur Lauf- bzw. Abtastrichtung senkrechter Richtung, des Heizfleckes an der Oberfläche der Muster sowie die übergroße Breite des Abschnittes für die Temperaturregistrierung an der Oberfläche der Muster, d. h. die Größe des Abschnittes für die Temperaturregistrierung in zur Lauf- bzw. Abtastrichtung an der Oberfläche der Muster senkrechter Richtung, unzulässige Meßfehler der Wärmeleitfähigkeit infolge der Abweichungen der idealisierten Beziehungen (13), (14) von der realeren Beziehung (9) ergeben, während die Abmessungen des Heizfleckes und des Abschnittes für die Temperaturregistrierung in der Abtastrichtung weniger kritisch wirken, was sich aus den Beziehungen (13), (14) und aus dem Prinzup der Superposition von Temperaturfeldern ableiten läßt. Allerdings ergibt sich bei übermäßig geringer Breite des Heizfleckes eine unzulässige Überhitzung der Muster, während die herabgesetzte Leistung der Quelle eine unzulässig geringe Erhitzungstemperaturhöhe im Bereich der Temperaturregistrierung hinter der Quelle und ein unzulässig geringes Signal/Rauschverhältnis für den Temperaturgeber zur Folge hat. Die übermäßig kleine Breite des Abschnittes für die Temperaturregistrierung verursacht eine unzulässige Einflußnahme einzelner Vorsprünge der rauhen Oberfläche auf die Anzeige des Temperaturgebers, einen unzulässig niedrigen Signalpegel des Temperaturgebers und ein unzulässig geringes Signal/Rauschverhältnis des Temperaturgebers.

Daher wird bei der vorbereitenden Einstellung der Vorrichtung auf die Messungen, welche vor der Inbetriebnahme der Vorrichtung vorgenommen wird, die Breite L des Heizfleckes in einem Bereich zwischen dessen Mindest- und dessen Höchstwerten $L_1$ und $L_2$ definiert, welche innerhalb von $0{,}01 < L_1/L_2 < 1$ ausgewählt werden, wobei $L_2$ weniger als $x_0$ ausgewählt wird. Die Breite 1 des Abschnittes für die Temperaturregistrierung definiert man in einem Bereich zwischen dessen Mindest und dessen Höchstwerten $I_1$ und $I_2$, die innerhalb von $0{,}00 < l_1/l_2 < 1$ ausgewählt werden, wobei $I_2$ kleiner als $x_0$ ausgewählt wird. Es ist hierbei ausschlaggebend, daß ausgerechnet durch den mittleren Teil des Heizfleckes das hauptsächliche Aufheizen der Muster eintritt, so daß man den Heizfleck derart formiert, daß bezogen auf dessen Breite L (innerhalb des mittleren Teiles des Heizfleckes mit der Breite L, wenn die Heizfleckgrenzen undefieniert bleiben) den Mustern mindesten 60 % Nutzleistung der Heizquelle zuteil werden. Es ist notwendig, daß der mittlere Teil des Abschnittes für die Temperaturregistrierung vorwiegend für das zu registrierende Signal sorgt, welches die Temperatur der erwärmten Oberflächen der Muster charakterisiert, weshalb der Abschnitt für die Temperaturregistrierung so ausgebildet wird, daß innerhalb seiner Breite 1 (innerhalb des mittleren Teiles des Abschnittes für die Temperaturregistrierung mit der Breite 1, wenn die Grenzen des Abschnittes für die Temperaturregistrierung undefieniert bleiben) mindestens 60 % Nutzsignal des Temperaturgebers konzentriert sind. Man bewirkt auch eine wechselseitige Verschiebung der Linien, welchen entlang an der Oberfläche der Muster der Heizfleck und der Abschnitt für die Temperaturregistrierung wandern, indem günstige Abstände dazwischen so lange ausgewählt werden, bis eine minimale Auswirkung der Form des Heizfleckes und des Abschnittes für die Temperaturregistrierung auf die Meßergebnisse der Wärmeleitfähigkeit erlangt wird.

Falls die Meßverhältnisse es gestatten, den Heizfleck bei dem Normalgesetz der Verteilung der Leistungsdichte der Heizquelle auf dem Heizfleck und bei einer rechteckigen Gestaltung des Abschnittes für die Temperaturregistrierung des Musters (dieser Fall wurde bereits vorstehend behandelt) kreisförmig auszugestalten, läßt man sich den Mittelpunkt des Heizfleckes und denselben des Abschnittes für die Temperaturregistrierung an ein und derselben Linie bewegen. Für den Fall, daß sich die Nutzleistung auf dem Heizfleck frei verteilt, der Heizfleck willkürlich ausgestaltet ist und der Abschnitt für die Temperaturregistrierung eine freie Form besitzt, macht es sich erforderlich, daß sich an der Oberfläche des zu testenden Musters und des Vergleichsmusters die Linien wechselseitig verschieben, welchen entlang sich der Heizfleck und der Abschnitt für die Temperaturregistrierung verlagern, und daß ein sinnvoller Abstand dazwischen so lange ausgewählt wird, bis eine minimale Beeinflussung der Meßergebnisse der Wärmeleitfähigkeit durch keine ideale Form des Heizfleckes und des Abschnittes für die Temperaturregistrierung gesichert wird.

Um die Messungen der Wärmeleitfähigkeit und die vorbereitende Einstellung der Vorrichtung auf die Messungen durchzuführen, wird ein Satz von Vergleichsmustern mit verschiedenen bekannten Wärme- und Temperaturleitfähigkeitswerten zusammengefaßt, deren Bereich ausgehend von den vermutlichen Bereichen der Wärme- und Temperaturleitfähigkeit der zu testenden Muster so ausgewählt wird, daß die Bereiche der Wärme- und Temperaturleitfähigkeit der zu testenden Muster und der Vergleichsmuster miteinander übereinstimmen bzw. einander nahekommen.

Es ist möglich, Messungen durchzuführen, ohne daß man sich in einem jeden Meßvorgang der Vergleichsmuster bedient. Für diesen Fall ermittelt man bei der Durchführung der vorbereitenden Operation den Parameter $q/(2\pi_0)$. Dieser Parameter wird z.B. durch Messungen der Werte q und $x_0$ gefunden. Gemäß der Beziehung (13) ist dieser Parameter gleich dem Parameterwert $\lambda_R (T_R-T_{R0})$, so daß sich entsprechend diesem Wert aus der Formel (2) die Wärmeleitfähigkeit der zu testenden Muster ermitteln lassen, indem man die überschüssige Grenztemperatur $T-T_0$ bestimmt. Später ermitttelt man bei der Erhitzung der zu testenden Muster mit Hilfe der Heizquelle die Werte deren überschüssiger Grenztemperaturen $T-T_0$, indem man sich der Angaben zum Parameterwert $q/(2\pi x_0)$ bedient. Weiterhin errechnet man nach der Formel (2), indem darin statt des Parameters $\lambda_R (T_R-T_{R0})$ der Parameter $q/(2\pi x_0)$ eingesetzt

wird, die gesuchten Werte der Wärmeleitfähigkeit der zu testenden Muster.

In einem anderen Fall ermittelt man bei der Durchführung der vorbereitenden Operation die Erhitzungshöhe der Vergleichsmuster ausgehend von der überschüssigen Grenztemperatur $T_R$-$T_{R0}$. Durch die Abtastung jedes der Sätze der Vergleichsmuster bestimmt man für jeden davon die Erhitzungshöhe in Form der überschüssigen Grenztemperatur $T_R$-$T_{R0}$. Im weiteren erhitzt man bei Anwendung der Heiz- und Registriereinheit die zu testenden Muster, ermittelt deren Erhitzungshöhe in Form der überschüssigen Grenztemperaturen $T$-$T_0$. Danach benutzt man die zuvor gewonnenen Angaben zur Erhitzungshöhe der Vergleichsmuster in Form des Parameters $T_R$-$T_{R0}$, indem ein Vergleichsmuster ausgewählt wird, das nach der Wärmeleitfähigkeit dem zu testenden Muster am nächsten kommt und die Beziehung (3) erfüllt. Weiter werden nach der Formel (2) die gesuchten Werte der Wärmeleitfähigkeit für die zu testenden Muster errechnet.

Statt die überschüssige Grenztemperatur $T_R$-$T_{R0}$ zu bestimmen, kann man die Erhitzungshöhe der Vergleichsmuster ausgehend von der dieser entsprechenden Differenz zwischen den Spannungen $U_R$-$U_{R0}$ oder von dem dieser äquivalenten elektrischen Wert ermitteln. Zu diesem Zweck ermittelt man durch die Abtastung jedes der Sätze der Vergleichsmuster für jeden Satz die Differenz der Spannungen $U_R$-$U_{R0}$ (oder den dieser äquivalenten elektrischen Wert). Später erhitzt man mit Hilfe der Heiz- und Registriereinheit die zu testenden Muster, ermittelt deren Erhitzungshöhe durch die Registrierung des Wertes $U$-$U_0$ oder eines diesem äquivalenten elektrischen Wertes für die zu testenden Muster. Danach bedient man sich der Information über die Differenz zwischen den Spannungen $U_R$-$U_{R0}$ für das Vergleichsmuster, das in bezug auf die Wärmeleitfähigkeit dem zu testenden Muster am nächsten kommt und die Beziehung (3) erfüllt. Dann errechnet man nach der Formel (2) die gesuchten Werte der Wärmeleitfähigkeit der zu testenden Muster.

In einem anderen Fall der Messungen unterbringt man ein oder mehrere Vergleichsmuster aus dem gebildeten Satz der Vergleichsmuster auf der Plattform gemeinsam mit zu testenden Mustern, erhitzt die Muster nacheinander mit Hilfe der Heiz- und Registriereinheit, indem deren Erhitzungshöhe (welche gleich oder proportional zu deren überschüssigen Grenztemperaturen ist) mittels der Heiz- und Registriereinheit registriert wird, und bestimmt die Wärmeleitfähigkeit der zu testenden Muster gemäß einer der Formeln (2).

Um genauer die optimalen Parameter des Meßverfahrens ( die Maße des Heizfleckens und des Abschnittes für die Temperaturregistrierung, der Abstand $x_0$ zwischen dem Mittelpunkt des Abschnittes für die Temperaturregistrierung und dem des Heizfleckes, die Abtastgeschwindigkeit, die Anfangstemperaturen der Vergleichsmuster und der zu testenden Muster, die Nutzleistung der Heizquelle, der Abstand zwischen den Linien an der Oberfläche der Muster, welchen entlang sich der Heizfleck und der Abschnitt für die Temperaturregistrierung an der Oberfläche der Muster bewegen) bestimmen zu können, sind während der vorbereitenden Einstellung der Vorrichtung auf die Messungen Vergleichsmessungen der Wärmeleitfähigkeit anhand der Vergleichsmuster, die eine gleiche oder angenäherte Wärmeleitfähigkeit besitzen, jedoch sich im wesentlichen nach der Temperaturleitfähigkeit unterscheiden, durchzuführen. Aus den Beziehungen (13) und (14), die eine Grundlage für die Beziehung (2) bilden, folgt, daß die Temperaturleitfähigkeit die Meßergebnisse dann nicht beeinflußt, wenn ein punktförmiger Heizfleck und ein punktförmiger Abschnitt für die Temperaturregistrierung eingesetzt werden, sich die Abtastlinien des Heizfleckens und des Abschnittes für die Temperaturregistrierung genau decken und der Beeinflussung durch eine Wärmeabgabe in die Umgebung begegnet wird. Jedoch bei realen Messungen ist dies nicht erreichbar, so daß die Meßergebnisse für Muster mit gleicher Wärmeleitfähigkeit und unterschiedlicher Temperaturleitfähigkeit unterschiedlich sind, und zwar desto unterschiedlicher je größer die Parameter aus dem Meßverfahren von den optimalen Parametern abweichen. Daher werden von vornherein bei unterschiedlichen Parametern des Meßverfahrens Messungen der Wärmeleitfähigkeit anhand der Muster mit gleicher oder naher Wärmeleitfähigkeit und unterschiedlicher Temperaturleitfähigkeit (bei einem Unterschied der letzteren von über 50 %) über den gesamten Bereich der Wärmeleitfähigkeit der zu testenden Muster bei verschiedenen Parametern des Meßverfahrens durchgeführt. Die Parameter des Meßverfahrens, bei denen die geringste Auswirkung der Temperaturleitfähigkeit auf die Meßergebnisse der Wärmeleitfähigkeit gesichert wird, wählt man als optimale Parameter des Meßverfahrens aus.

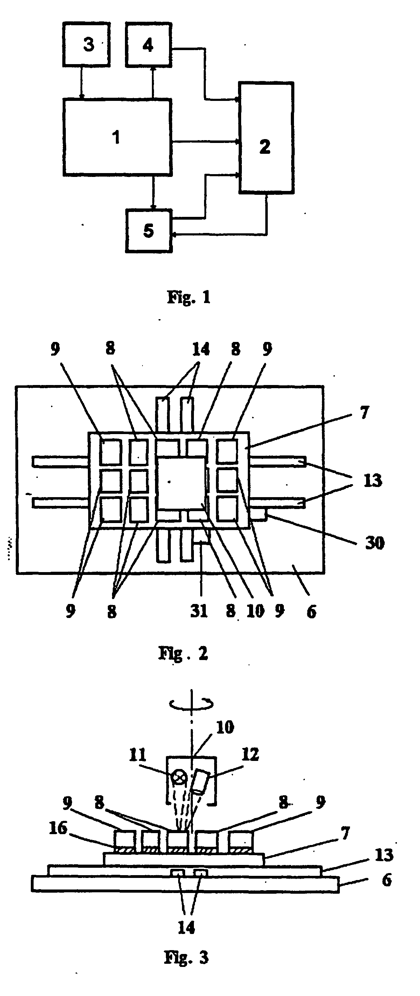

Die Vorrichtung zur Bestimmung der Wärmeleitfähigkeit fester Substanzen (Fig. 1) umfaßt einen Meßblock 1, eine Informationsregistrier- und - verarbeitungseinheit 2, eine Einheit für die Abtastgeschwindigkeitänderung (3), eine Signalzeitverzögerungseinheit 4 und eine Ausgangsdatenspeichereinheit 5.

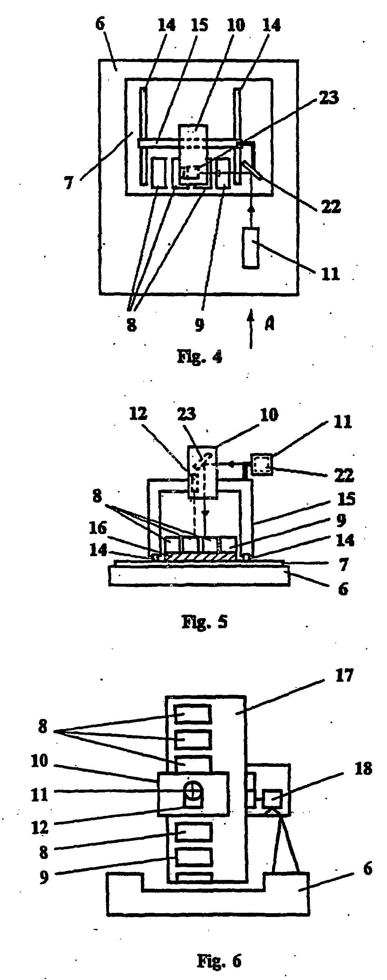

Der Meßblock 1 der Vorrichtung zur Bestimmung der Wärmeleitfähigkeit fester Substanzen (Figuren 2 und 3) enthält im allgemeinen einen Arbeitstisch 6, auf welchem eine Plattform 7 zur Aufnahme von zu testenden Mustern und Vergleichsmustern jeweils 8 und 9 aufgestellt ist, und eine Heiz- und Registriereinheit 10, die eine Heizquelle 11, in welcher Eigenschaft eine Lampe, ein Laser, eine Kontakt- oder Strahlungsquelle und mindestens ein Temperaturgeber 12 fungieren können, aufweist. Hierbei kann die Plattform 7 als Zweikoordinatentisch ausgebildet werden, der sich in zwei gegenseitig senkrechten Richtungen entlang der Längsführungen (längs der Bewegungslinie der Heiz- und Registriereinheit 10 während der Messungen) und den Querführungen (senkrecht zur Bewegungslinie der Heiz- und Registriereinheit 10 während der Messungen) jeweils 13 und 14 bewegen kann.

Um eine übermäßige Wärmeabgabe der zu testenden Muster und der Vergleichsmuster 8 und 9 an den Werkstoff der Plattform 7 zu vermeiden, wodurch eine Abweichung der theoretischen Beziehungen stattfindet, wird die Plattform 7 aus einem wärmedämmenden Werkstoff gebaut oder werden zwischen der Plattform 7 und den Mustern 8 und 9 wärmedämmende Einlagen 16 so angeordnet, daß die Muster 8 und 9 mit der Plattform direkt nicht in Berührung kommen.

Je nach den konstruktiven Besonderheiten bei der Bewältigung der gestellten Aufgaben bieten sich verschiedene Kombinationen für die wechselseitige Verlagerung der Plattform 7 und der Heiz- und Registriereinheit 10. Wenn z.B. die Heiz- und Registriereinheit 10 ortsfest ausgeführt ist, so ist in diesem Fall die Plattform 7 in zwei gegenseitig senkrechten Richtungen an den Längs- und Querführungen 13 und 14 bewegbar angeordnet. Für den Fall, daß die Plattform 7 ortsfest ist, soll sich dann die Heiz- und Registriereinheit 10 in zwei gegenseitig senkrechten Richtungen bezüglich der Plattform (siehe Figuren 4 und 5) bewegen können; im vorliegenden Fall kann die Heiz- und Registriereinheit 10 am Wagen angebracht werden, welcher in Längsrichtung entlang dem Rahmen 15 bewegbar ist, welcher Rahmen sich in Querrichtung bezüglich der Plattform 7 an den Führungen 14 bewegen kann. Falls die Plattform 7 in Längsrichtung entlang der Linie mit den angeordneten zu untersuchenden Mustern und den Vergleichsmustern 8 und 9 bewegbar angeordnet ist, kann sich dann die Heiz- und Registriereinheit 10 am Rahmen 15 befinden, der entlang den Querführungen 14 bewegbar ausgeführt ist; wenn die Plattform 7 in Querrichtung bewegbar ist, kann die Heiz- und Registriereinheit 10 am Wagen angebracht werden, welcher am Rahmen 15 bewegbar angeordnet ist und sich entlang diesem in Längsrichtung verlagern kann. Die zu testenden Muster und die Vergleichsmuster 8 und 9 können auf den wärmedämmenden Einlagen 16 angeordnet werden oder die Plattform 7 selbst wird aus wärmedämmendem Werkstoff gebaut.

Die Plattform 7 kann aber auch als geschlossener Kreis wie z.B. Laufrad, Ellipse, Rechteck, ausgebildet werden und horizontal oder vertikal wie etwa ein horizontales oder vertikales Karussel, eine geschlossene Bandanlage ausgerichtet werden, wodurch ein kontinuierlicher Meßvorgang bei einem einseitigen Nonstoplauf der Plattform bezüglich der Heiz- und Registriereinheit 10 oder der Heiz- und Registriereinheit 10 bezüglich der Plattform 7 sichergestellt wird.

In Fig. 6 ist eine Vorrichtung mit einer in Form eines Laufrades 17 ausgebildeten Plattform 7 (in einem Schnitt ) mit einer Heiz- und Registriereinheit 10 und den zu testenden Musrern und den Vergleichsmustern 8 und 9 gezeigt, die gemeinsam mit der Heiz- und Registriereinheit 10 im Innern des Laufrades 7 angeordnet sind, das durch einen Antrieb 18 in Drehung gesetzt wird. Die Heiz- und Registriereinheit 10 sowie die zu testenden Muster und die Vergleichsmuster 8 und 9 können aber auch an der Außenseite des Laufrades 7 angeordnet werden. Es bietet sich eine Ausführungsform der Vorrichtung an, bei welcher die Heiz- und Registriereinheit 10 bezüglich des Laufrades 7 rotiert.

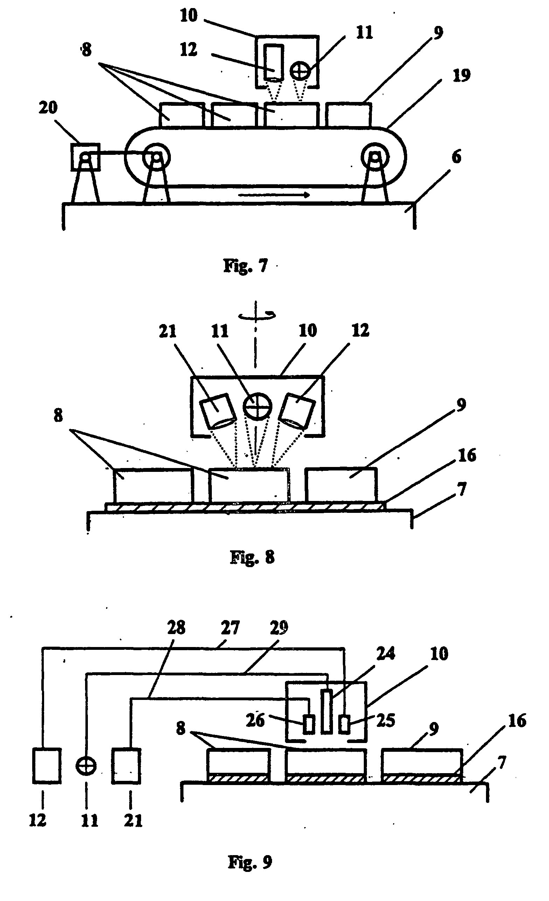

Fig. 7 zeigt eine Vorrichtung zur Schnellbestimmung der Wärmeleitfähigkeit fester Substanzen mit einer Plattform, die als geschlossenes Band 19 ausgeführt ist, einer Heiz- und Registriereinheit 10 und den zu testenden Mustern und den Vergleichsnustern 8 und 9, welche außerhalb des Bandes 19 angeordnet sind, das durch einen Antrieb 20 in Drehung gesetzt wird.

Die aufgeführten Kombinationen ermöglichen eine Abtastung des Heizfleckes der Heizquelle 11 an der Oberfläche der Muster 8, 9 unter entsprechender Abtastung der Oberfläche der Muster 8, 9 durch den Temperaturgeber 12, so daß dadurch die Aufgabe von der Registrierung einer heterogenen Wärmeleitfähigkeit der zu testenden Muster 8 gelöst wird. Es verbessert sich auch die Effizienz der Messungen, da sich auf der Plattform 7 eine beachtliche Menge an zu testenden Mustern 8 zu mehreren Reihen (Fig. 2) anordnen läßt.

Als Heizquelle 11 eignenet sich eine berührungslose optische, konvektive oder Kontaktquelle für die Oberflächenerhitzung der Muster 8 und 9.

In der Heiz- und Registriereinheit 10 können weiters verschiedene Elemente eingesetzt werden, die die Laufrichtung eines Lichtstrahlen, insbesondere eines Laserstrahlen, steuern und die eine Lichtleiter-Ausgangseinheit, eine Linse, ein Prisma, ein Kristall, ein Spiegel, eine Linsen- und/oder Prismen- und/oder Spiegel-Anordnung und dergleichen sind, die optisch mit der Heizquelle 11 wie Laser, der außerhalb der Heiz- und Registriereinheit 10 angeordnet ist, gekoppelt sind (siehe Figuren 4 und 5).

Um die Schnellwirkung der Vorrichtung zu verbessern, kann die Heiz- und Registriereinheit 10 einen zusätzlichen Temperaturgeber 21 (Fig. 8) besitzen, der der Heizquelle - in Laufrichtung der Heiz- und Registriereinheit 10 gesehen - vorgeschaltet ist. Der zusätzliche Temperaturgeber 21 kann so ausgebildet sein, daß er nach seinem optisch-elektrischen Verhalten dem hauptsächlichen Temperaturgeber 12 ähnelt. In diesem Fall erfolgt nach Beendigung des einen Meßzyklus, der sich bei einseitigem Lauf der Plattform 7 abspielte, der andere Meßzyklus beim Lauf der Plattform 7 oder der Heiz- und Registriereinheit 10 in entgegengesetzter Richtung. Dabei verändern sich die Funktionen des hauptsächlichen Temperaturgebers 12 und des zusätzlichen Temperaturgebers 21. In diesem Fall dient der hauptsächliche Temperaturgeber 12 für die Registrierung der Anfangstemperaturen der zu testenden und der Vergleichsmuster 8 und 9, während der zusätzliche Temperaturgeber 21 deren Grenztemperaturen registriert. Bei verschiedenem Abstand zwischen dem Mittelpunkt des Heizfleckes und dem der Abschnitte für die Temperaturregistrierung der Geber 12 und 21 und bei Wiederholung der Messungen unter entgegengesetzter Bewegung der Heiz- und Registriereinheit 10 bietet sich für die ein und dieselben heterogenen zu testenden Muster 8 die Möglichkeit, die Meßtiefe unter Gewinnung zusätzlicher Information über den Aufbau der zu testenden Muster 8 (Wärmetomographie) zu verändern.

Fig. 9 zeigt einen Meßblock 1, bei dem die Heiz- und Registriereinheit 10 mit einer Formierungseinrichtung 24 zum Formieren eines Heizfleckes und mit Elementen 25, 26 der optischen Verbindung der Temperaturgeber mit der Oberfläche der Muster 8 und 9 (nachstehend Elemente der optischen Verbindung genannt) versehen ist, die mit den Temperaturgebern 12 und 21 gekoppelt sind, die außerhalb der Heiz- und Registriereinheit 10 angebracht sind und mit der Oberfläche der Muster 8 und 9 unter Zuhilfenahme der Elemente 25 und 26 der optischen Verbindung zusammenwirken. Die Elemente 25 und 26 der optischen Verbindung sowie die Formierungseinrichtung 24 zum Formieren des Heizfleckes sind mit den Temperaturgebern 12 und 21 und der Heizquelle 11 mittels der optischen Verbindungslinien 27, 28 und 29 verbunden. Es ist aber auch möglich, daß durch die optischen Verbindungslinien 27 und 28 die Elemente 25, 26 der optischen Verbindung nicht mit zwei Temperaturgebern 12, 21 sondern nur mit einem Temperaturgeber 12 oder 21 verbunden sind, wobei der Temperaturgeber 12 oder 21 wechselweise in kurzen Zeitspannen (kürzer als Mindestzeit der Abtastung eines Musters 8 bzw. 9) mit den optischen Verbindungslinien 27, 28 verbunden wird.

Die Verlagerung der Plattform 7 in Längsrichtung vollzieht sich (siehe Fig. 2) dank einem Mechanismus 30 für die Längsbewegung der Plattform 7 und in Querrichtung dank einem Mechanismus 31 für die Querbewegung der Plattform 7.

Für den Fall, daß die Plattform 7 ortsfest ist (siehe Figuren 4 und 5), ist dann die Heiz- und Registriereinheit 10 am Wagen auf dem Rahmen 15 befestigt, wobei der Wagen längs dem Rahmen 15 in Längsrichtung laufen kann und der Rahmen 15 entlang den Führungen 14 in Querrichtung bewegbar ist.

Die Figuren 4 und 5 zeigen eine der möglichen Ausführungsformen der optischen Verbindung der Heizquelle 11 mit der Oberfläche des zu testenden und des Vergleichsmusters 8 und 9 über fokussierende Elemente, durch welche die Laufrichtung eines Licht- bzw. Laserstrahlen gesteuert wird und die als zwei schwenkbare Spiegel 22 und 23 ausgebildet sind, welche den Licht- oder Laserstrahl auf die Muster 8 und 9 lenken. Der Spiegel 22 ist mittels einer Konsole an einem der Enden des Rahmens 15 festgemacht. Bei Verlagerung der Heiz- und Registriereinheit 10 dank dem Wagen entlang dem Rahmen 15 in Längsrichtung längs den Mustern 8 und 9 trifft die Strahlung des Lasers 11 fortwährend auf den Spiegel 22 und wird auf den Spiegel 23, der in der Heiz- und Registriereinheit 10 installiert ist, zurückgespiegelt. Bei der Rückstrahlung durch den schwenkbaren Spiegel 23 trifft der Laserstrahl auf die Oberfläche der Muster 8 und 9 und erwärmt sie.

Das technische Ergebnis wird durch die Vorrichtung dadurch erreicht, daß in der Heiz- und Registriereinheit 10 die Heizquelle 11 und der Temperaturgeber 12 von der Oberfläche der Muster 8 und 9 so beabstandet und unter solch einem Winkel bezüglich der Oberfläche der Muster 8 und 9 angeordnet sind und die Bestrahlung der Muster 8 und 9 durch die Heizquelle 11 und die Bestarhlung des Temperaturgebers 12 durch die Muster 8 und 9 so fokussiert oder in bezug auf die Fläche und die Form des Heizfleckes sowie in bezug auf die Fläche und die Form des Abschbnittes für die Temperaturregistrierung so eingeschränkt ist, daß innerhalb eines Teiles des Heizfleckes, dessen Breite gleich L festgelegt ist, dem Muster mehr als 60 % Nutzleistung der Heizquelle zugeführt wird, während innerhalb der Zone mit der Breite 1 des Abschnittes für die Temperaturregistrierung mehr als 60 % Nutzsignal des Temperaturgebers konzentriert sind. Somit wird die Breite L dieses Teiles des Heizfleckes in einem Bereich zwischen deren Mindest- und deren Höchstwert $L_1$ und $L_2$ gesichert, die innerhalb von $0,01 < L/L_2 < 1$ ausgewählt sind, wobei die Breite $L_2$ kleiner als Abstand $x_0$ zwischen dem Mittelpunkt des Abschnittes für die Temperaturregistrierung und dem des Heizfleckes ausgewählt ist. Die Breite 1 der Zone bzw. des Teiles des Abschnittes für die Temperaturregistrierung wird in einem Bereich zwischen deren Mindest- und deren Höchstwert $l_1$ und $l_2$ erreicht, die innerhalb von $0,001 < l_1/l_2 < 1$ ausgewählt sind, wobei die Breite $l_2$ kleiner als $x_0$ ausgewählt ist. Die Abmessungen des Heizfleckes und des Abschnittes für die Temperaturregistrierung sollen in der Abtastrichtung so ausgewählt werden, daß keine Überlagerung des Heizfleckes und des Abschnittes für die Temperaturregistrierung stattfindet. Daher sind die konstruktiven Daten der Heizund Registriereinheit 10 davon ausgehend definiert, daß der Abstand $x_0$ zwischen dem Mittelpunkt des Bereiches für die Temperaturregistrierung und solchem des Heizfleckes mit Rücksicht auf die minimale Länge $l_{omin}$ des zu testenden Musters und des Vergleichsmusters 8 und 9 innerhalb von $(d_1/2 + d_2/2) < x_0 < 2 \, l_{0min}$, wobei $d_1$ - Länge des Heizfleckes entlang der Lauflinie des Heizfleckes und des Abschnittes für die Temperaturregistrierung, $d_2$ - Länge des Abschnittes für die Temperaturregistrierung längs der Lauflinie des Heizfleckes und des Abschnittes für die Temperaturegistrierung bedeutet, ausgewählt wurde, wobei der Wert $l_{0min}$ innerhalb von 0,5 bis 2000 mm ausgewählt wurde. Die Länge des Heizfleckes $d_1$ wurde mit Blick auf die Beziehung $d_1 < l_{0min}$ und die Länge des Abschnittes für die Temperaturregistrierung auf die Beziehung $d_2 < l_{min}$ ausgewählt.

Bei einer Länge der Muster 8 und 9 unterhalb von 1 mm ist keine Realisierung des anmeldungsgemäßen Verfahrtens zum Messen der Wärmeleitfähigkeit unter Zuhilfenahme bekannter Temperaturgeber und Heizquellen möglich. Bei einer Länge der Muster von über 2000 mm werden die Elemente der Vorrichtung übergroß und nicht real für deren Realisierung. Bei Werten $x_0$ von mehr als $2 \, l_{0min}$ erreicht die Erhitzungstemperatur der zu testenden Muster und der Vergleichsmuster nicht ihren Grenzwert, der für die Bestimmung der Wärmeleitfähigkeit der zu testenden Muster 8 gemäß der Beziehung (2) benötigt wird. Um die gewünschte Meßgenauigkeit der Wärmeleitfähigkeit zu gewährleisten, reicht es für heterogene zu testende Muster aus, die notwendige Meßtiefe zu sichern, die Abschnitte mit veränderlicher Wärmeleitfähigkeit zu begrenzen, eine Überhitzung der Muster 8, 9 im Heizfleck zu vermeiden, die Erhitzungshöhe an der Oberfläche der Muster 8 und 9 zu sichern, die einer sicheren Registrierung genügt, wobei die Geschwindigkeit der Relativbewegung der Muster 8 und 9 in einem Bereich von 0,1 bis 300 mm/s ausgewählt wurde. Wie die Praxis ergeben hat, muß die Leistung q der Heizquelle 6 in einem Bereich von 0,01<q<1000 W ausgewählt werden.

Die Heiz- und Registriereinheit 10 kann eine berührungslose - optische - bzw. konvektive bzw. Kontaktheizquelle 11 zum Aufheizen der Muster 8 und 9 besitzen. Es bietet sich aber auch eine Ausbildung der Heiz- und Registriereinheit 10 an, bei der eine Formierungseinrichtung 24 zum Formieren eines Heizfleckes für die Muster 8 und 9 Bestandteil ist, welche eine Lichtleiter-Ausgangseinheit und/oder eine Linse und/oder ein Prisma und/oder ein Spiegel, eine Linsen-, Prismen-, Spiegel-Anordnung ist, die optisch mit der Heizquelle 11 wie etwa Laser, der sich außerhalb der Heiz- und Registriereinheit 10 befindet, verbunden ist. Eine der Ausführungsformen der optischen Verbindung ist in Figuren 4 und 5 veranschaulicht. Die Heiz- und Registriereinheit 10 kann darüber hinaus ein oder mehrere Elemente 25 und/oder 26 der optischen Verbindung in Form eines Lichtleiters (z.B. in Form flexibler optischer Fasern) und/oder einer Linse und/oder eines Spiegels und/oder eines Prismas und/oder einer Linsen-, Spiegel-, Prismen-Anordnung aufweisen, durch welche ein Abschnitt für die Temperaturregistrierung an der Oberfläche der Muster 8, 9 bei einer berührungslosen Temperaturregistrierung der Muster 8 und 9 ausgehend von der optischen Strahlung durch deren Oberfläche gebildet wird.

Die Vorrichtung umfaßt einen Satz von Vergleichsmustern 9 mit verschiedenen bekannten Wärme- und Temperaturleitfähigkeitswerten, deren Bereich ausgehend von eventuellen Bereichen der Wärme- und Temperaturleitfähigkeit der zu untersuchenden Muster 8 so ausgewählt wird, daß sich die Bereiche der Wärme- und Temperaturleitfähigkeit der zu testenden Muster und der Vergleichsmuster 8 und 9 decken oder einander nahekommen. Bei der Durchführung von Messungen der Wärmeleitfähigkeit der zu testenden Muster 8 werden dem besagten Satz bestimmte Vergleichsmuster 9 (ein, zwei oder mehrere) entnommen und auf die Plattform 7 mit den zu testenden Mustern 8 aufgelegt. Die Auswahl der Vergleichsmuster 9 wird so getroffen, daß deren Wärme- und Temperaturleitfähigkeit denen der zu testenden Muster 8 nahekommen, indem dabei man von dem gewünschten Signal/Rauschverhältnis für die Signale der Temperaturgeber 12 und 21 und einem damit verbundenen zufälligen Meßfehler, der zulässigen Anzahl der systematischen Meßfehler, der zulässigen Erhitzungshöhe der Vergleichmuster und der zu testenden Muster 9 und 8, der geforderten Effizienz der Messungen und unter Beachtung der Beziehung (3) ausgeht. Um die Meßgenauigkeit zu verbessern, werden auf die Plattform 7 nicht ein sondern zwei und mehr Vergleichsmuster 9 mit gleicher oder unterschiedlicher Wärmeleitfähigkeit aufgelegt, deren Charakteristiken der Wärmeund Temperaturleitfähigkeit der zu testenden Muster nahekommen und die vorstehend aufgeführten Beziehungen erfüllen, wobei die Bestimmung der Wärmeleitfähigkeit der zu testenden Muster 8 unabhängig für jedes der Vergleichsmuster 9 mit Hilfe der Formel (2) mit späterer Mittelung der Meßergebnisse vorgenommen wird. Dies ermöglicht, erstens, eventuelle Leistungsschwankungen der Heizquelle 11, der Empfindlichkeit der Temperaturgeber 12 und 21 und anderer Parameter der Vorrichtung im Meßzyklus der Wärmeleitfähigkeit der auf der Plattform 7 befindlichen zu testenden Muster 8 in Betracht zu ziehen und, zweitens, zufällige Meßfehler der Wärmeleitfähigkeit zu reduzieren.

Die Vorrichtung kann mit einer Einheit für die Änderung der Abtastgeschwindigkeit 3 versehen werden (Fig. 1). In diesem Fall wird die Erreichung optimaler Parameter des Meßverfahrens (Form und Maße des Heizfleckes, Nacheilabstand zwischen dem Heizfleck und dem Abschnitt für die Temperaturregistrierung, Form und Maße des Abschnittes für die Temperaturregistrierung, . Abtastgeschwindigkeit, Wärme- und Temperaturleitfähigkeit der Vergleichsmuster 9, gegenseitige Lage der Abtastlinien des Heizfleckes und des Bereiches für die Temperaturregistrierung) während der vorbereitenden Einstellung der Vorrichtung auf die Messungen mit Hilfe von Kontrollmessungen der Wärmeleitfähigkeit nur der Vergleichsmuster 9 durch deren Gegenüberstellung mit anderen Vergleichsmustern 9 gewährleistet, wobei jedes Mal verschiedene Abtastgeschwindigkeiten, d. h. verschiedene Laufgeschwindigkeiten der Heiz- und Registriereinheit 10 bezüglich der Muster 8 und 9, benutzt werden, was unter realen Meßverhältnissen die überschüssigen Grenztemperaturen beeinflußt (siehe Rykalin N.N. Berechnungen der Wärmevorgänge beim Schweißen. Moskau, Verl. Maschgis, 1951, S. 167). Während der Kontrollmessungen unter verschiedenen Abtastgeschwindigkeiten werden optimale Parameter der Vorrichtung durch Erreichen der geringsten Auswirkung der Abtastgeschwindigkeit auf die Ergebnisse der Kontrollmessungen und durch die beste Übereinstimmung der Resultate der Kontrollmessungen mit den realen Werten der Wärmeleitfähigkeit der Vergleichsmuster 9 ausgesucht.

Ermittelt werden die optimalen Parameter der Betriebsweise ausgehend von konkreten Meßbesonderheiten und -verhältnissen der Wärmeleitfähigkeit. So ermöglicht z.B. die Auswahl des Parameters L, der seinem größtmöglichen Wert nahekommt, eine höhere Leistung q der Heizquelle 11 ohne Überhitzung des zu testenden und des Vergleichsmusters 8 und 9 in Anspruch zu nehmen, indem dadurch die Temperatur im Bereich deren Registrierung erhöht wird, so daß sich das Signal/Rauschverhältnis der Temperaturgeber 12 und 21 verbessert und zufällige Meßfehler reduziert werden, obwohl dabei sich systematische Meßfehler vermehren. Die Verminderung von L läßt sich den systematischen Meßfehler verringern, weil der Heizfleck einem punktförmigen Heizfleck nahekommt, wobei allerdings sich die Energiedichte im Heizfleck erhöht und die maximale Erhitzungstemperatur der Muster 8 und 9 ansteigt, wodurch deren Bruch oder unzulässige Änderungen eintreten kann bzw. können.

Ein Anstieg der Leistung q der Heizquelle 11 verbessert die Meßgenauigkeit, weil sich die Temperatur im Registrierungsbereich erhöht und sich das Signal/Rauschverhältnis der Temperaturgeber 12 und 21 verbessert, wobei allerdings ein Bruch oder eine unzulässige thermische Änderung des zu testenden Musters und des Vergleichsmusters 8 und 9 möglich ist. Abgesehen davon führt dies bei Untersuchungen feuchtigkeitsgesättigter Muster 8 zu einer höheren Feuchtigkeitswanderung, einer Verdampfung des gesättigten Fluids, was sich nachteilig auf die Meßgenauigkeit auswirkt. Eine Verminderung von q beeinträchtigt die Meßgenauigkeit infolge einer Temperatursenkung im Bereich deren Registrierung und einer Verschlechterung des Signal/Rauschverhältnisses der Temperaturgheber 12 und 21, sichert dafür eine bessere Erhaltung der Muster 8 und 9 dank deren geringerer Erwärmung und eine höhere Meßgenauigkeit für feuchtigkeitsgesättigte Muster 8.

Eine Vergrößerung der Breite 1 des Abschnittes für die Temperaturregistrierung ergibt einen Zuwachs des systematischen Meßfehlers der Wärmeleitfähigkeit, weil die Temperatur nicht nur an der Erhitzungslinie, wie das in der Berechnungsformel (2) vorgesehen ist, sondern auch in zahlreichen, von der Erhitzungslinie abseits liegenden Punkten registriert wird. Abgesehen davon trägt die Vergrößerung von 1 zu einem besseren Signal/Rauschverhältnis der Temperaturgeber 12 und 21 und somit zur Ermäßigung des zufälligen Meßfehlers bei. Eine Verminderung von 1 verringert den systematischen Meßfehler nach seiner absoluten Größe, erhöht dafür einen zufälligen Meßfehler, weil sich das Signal/Rauschverhältnis der Temperaturgeber 12 und 21 verschlechtert.

Eine Vergrößerung des Abstandes $x_0$ zwischen dem Mittelpunkt des Abschnittes für die Temperaturregistrierung und demselben des Heizfleckes führt zu einer größeren Meßtiefe, weil dabei die Eindringtiefe der Wärmeenergie der Heizquelle in das zu testende Muster 4 zunimmt. Die Vergrößerung von $x_0$ verringert den systematischen Meßfehler der Wärmeleitfähigkeit, weil dabei die Abweichung der realen Maße des Heizfleckes und des Abschnittes für die Temperaturregistrierung von den idealisierten punktförmigen Maßen nicht mehr so wesentlich ist, wobei jedoch sich der zufällige Meßfehler vergrößert, da sich die Temperatur im Registrierungsbereich verringert. Eine Verminderung von $x_0$ ergibt eine Vergrößerung des systematischen Meßfehlers, wobei jedoch sich der zufällige Meßfehler infolge eines Temperaturanstieges im Bereich der Temperaturregistrierung verringert. Gleichzeitig führt die Verminderung von $x_0$ zu einer Abnahme der Meßtiefe, wodurch die Aussagekraft des Resultats für heterogene zu testenden Muster 8 beeinträchtigt wird.

Eine Erhöhung der Laufgeschwindigkeit v der Heiz- und Registriereinheit 10 bezüglich des zu testenden Musters und des Vergleichsmusters 8 und 9 ergibt eine Abnahme der Meßtiefe und eine Vergrößerung des systematischen Meßfehlers, weil sich die Einflußnahme durch den Unterschied des realen Heizfleckes und Abschnittes für die Temperaturregistrierung von dem idealisierten punktförmigen Heizfleck und Abschnitt für die Temperaturregistrierung vergrößert, wobei sich die Effizienz von Messungen verbessert. Gleichzeitig verringert sich die maximale Temperatur der Muster 8 und 9 im Heizfleck. Eine Verringerung der Laufgeschwindigkeit v der Heizund Registriereinheit 10 ergibt eine Vergrößerung der Meßtiefe und eine Erhöhung der Meßgenauigkeit, beeinträchtigt aber die Effizienz der Messungen und führt zu einer Überhitzung der Muster 8 und 9 innerhalb des Heizfleckes, was für feuchtigkeitsgesättigte und nicht wärmebeständige zu testende Muster 8 unzulässig ist.

Um den systematischen Meßfehler beim Messen der Wärmeleitfähigkeit weiter zu verringern, wird die Vorrichtung so aufgebaut, daß die Ausgangsdatenspeichereinheit 5 Werte für die systematischen Meßfehler der Wärmeleitfähigkeit je nach der zu messenden Größe enthält, die in die Ausgangsdatenspeichereinheit 5 während der vorbereitenden Einstellung der Vorrichtung auf die Messungen eingegeben werden und beim Vergleich der überschüssigen Grenztemperaturhöhen und bei der Auswertung dieser Daten durch die Informationsregistrier- und -verarbeitungseinheit 2 beachtet werden. Diese Werte der systematischen Meßfehler werden einmal nach der Montage der Vorrichtung oder bei deren zusätzlicher Einstellung mit Hilfe des Satzes der Vergleichsmuster 9 definiert, die in Anpassung an den Bereich der Wärmeleitfähigkeit der zu testenden Muster 8 ausgewählt sind und eine Temperaturleitfähigkeit aufweisen, die im mittleren Teil des Bereiches der eventuellen Temperaturleitfähigkeitswerte der zu testenden Muster 8 ausgewählt ist. Dazu werden mit Hilfe der Vorrichtung Kontrollbestimmungen der Wärmeleitfähigkeit der Vergleichsmuster 9 ausgehend von anderen Vergleichsmustern 9 durchgeführt, und der festgestellte Unterschied zwischen den gemessenen Werten und den Ist-Werten der Wärmeleitfähigkeit der Vergleichsmuster 9 wird als systematische Meßfehler definiert. Die systematischen Meßfehler in Bereichen zwischen den Wärmeleitfähigkeitswerten der Vergleichsmuster 9 werden mit Hilfe der Interpolation ermittelt. Die ermittelten Werte der systematischen Fehler werden je nach der gemessenen Größe der Wämeleitfähigkeit in die Ausgangsdatenspeichereinheit 5 eingegeben und bei Messungen als Korrekturen angewendet.

Bei der Temperaturregistrierung ausgehend von der elektromagnetischen Strahlung und bei der Erhitzung der Oberfläche des zu testenden Musters und des Vergleichsmusters 8 und 9 mit einem Lichtstrahlen wird deren Oberfläche zuvor mit einer Dünnschicht aus ein und demselben Stoff (z.B. einer Emaille), die die Strahlung der Heizquelle 11 gut verschluckt, versehen, um die optischen Daten (die Fähigkeit zur Verschluckung und der Abstrahlung) der Muster 8 und 9 auszugleichen. Die Oberflächen können zu diesem Zweck aufgerauht werden.

Um die Schnellwirkung der Vorrichtung zu erhöhen, kann die Heiz- und Rgistriereinheit 10 einen zweiten Temperaturgeber 21 (Fig. 8) und/oder ein zweites Element 26 der optischen Verbindung des Temperaturgebers 12 oder des Temperaturgebers 21 mit der Oberfläche der Muster 8 und 9 (Fig. 9) aufweisen. Der zweite Temperaturgeber 21 und/oder das zweite Element 26 der optischen Verbindung des Temperaturgebers 21 ist der Heizquelle 11 oder der Formierungseinrichtung 24 zum Formieren des Heizfleckes - in Laufrichtung der Heiz- und Registriereinheit 10 gesehen- vorgelagert. Der zweite Temperaturgeber 21 oder das Element 26 der optischen Verbindung des Temperaturgebers 21 mit der Oberfläche der Muster 8 und 9 sind in der Lage, die Funktion eines Anfangstemperaturregistrierers für die Muster 8 und 9 wahrzunehmen. Der zweite Temperaturgeber 21 und/oder das Element 26 der optischen Verbindung des Temperaturgebers 21 mit der Oberfläche der Muster 8 und 9 können so ausgebildet werden, daß sie gemäß ihren optisch-elektrischen Daten dem ersten Temperaturgeber 12 oder dem ersten Element 25 der optischen Verbindung des Temperaturgebers 12 analog sind. In diesem Fall wird nach Beendigung des Meßzyklus der neue Meßzyklus bei der Bewegung der Heiz- und Registriereinheit 10 in entgegengesetzter Richtung vorgenommen. Hierbei werden die Funktionen der Temperaturgeber 12 und 21 oder der Elemente 26 und 26 der optischen Verbindung der Temperaturgeber 12 und 21 mit der Oberfläche der Muster 8 und 9 in bezug auf die Registrierung der Anfangs- und der überschüssigen Grenztemperaturen der Muster 8 und 9 verändert.

Um die Effizienz und die Meßgenauigkeit zu erhöhen, besitzt die Vorrichtung eine Signalzeitverzögerungseinheit 4 zur Signalzeitverzögerung des Temperaturgebers 21 oder des Elementes 26 der optischen Verbindung des Temperaturgebers 21 mit der Oberfläche der Muster 8 und 9 (im folgenden Signalzeitverzögerungseineheit genannt) (Fig. 1). Die Signalverzögerungszeit durch die Signalzeitverzögerungseinheit 4 ist gleich S/v ausgewählt, wo S - Abstand zwischen den Mittelpunkten der Abschnitte für die Registrierung der Anfangstemperatur und der Temperatur der erhitzten Oberläche der Muster 8 und 9, v - Laufgeschwindigkeit der Heiz- und Registriereinheit 10 bezüglich der Muster 8 und 9 bedeutet. Die Verzögerung dient dafür, um die Werte der überschüssigen Grenztemperatur $T$ und $T_R$ in jedem Abschnitt der Muster 8 und 9 mit Rücksicht auf die Anfangstemperatur $T_0$ und $T_{R0}$ gerade in diesem Abschnitt ermitteln zu können. Eine Verzögerung macht sich deswegen erforderlich, weil sich die Anfangstemperatur innerhalb der Muster 8 und 9 (z.B. infolge spezifischer Lagerungsverhältnisse der Muster 8 und 9) vor den Messungen, wie etwa die Arbeit mit wassergesättigten Mustern 8, bei welcher die Ursache für Anfangstemperaturänderungen ein unterschiedlicher Verdampfungsgrad des Fluids in verschiedenen Abschnitten des Musters 8 ist, beachtlich verändern kann. Darüber hinaus verschwindet während der Verzögerung der Meßfehler, der bei jeder Messung beim Übergang von dem einen Muster 8 oder 9 zu einem anderen entsteht, wenn der eine Temperaturgeber bereits die Anfangstemperatur des nächsten Musters registriert, während der andere Temperaturgeber noch die überschüssge Erhitzungstemperatur des vorangehenden Musters 8 oder 9 registriert, wodurch sich unter Bedingungen unterschiedlicher Anfangstemperaturen der Muster eine beachtliche Beeinträchtigung der Meßgenauigkeit ergeben kann.

Der zusätzliche Temperaturgeber 21 oder das Element 26 der optischen Verbindung kann mit optisch-elektrischen Daten hergestellt werden, die sich von denen des Temperaturgebers 12 oder des Elementes 25 der optischen Verbindung unterscheiden. Im vorliegenden Fall wird die Heiz- und Registriereinheit 10 so ausgeführt, daß sie sich um 180 ° um eine zur Heizebene der Muster 8 und 9 senkrecht verlaufende Achse schwenken läßt, damit bei der Bewegung der Plattform 7 oder der Heiz- und Registriereinheit 10 in entgegengesetzter Richtung der Temperaturgeber 12 die Erhitzungsgrenztemperaturen weiter mißt, während der zusätzliche Temperaturgeber 21 die Anfangstemperaturen der Muster 8 und 9 registriert. Um mit einem neuen Meßzyklus zum Messen der Wärmeleitfähigkei zu beginnen, ist die Heiz- und Registriereinheit 10 um 180 ° zu schwenken.

Es bietet sich auch eine konstruktive Ausgestaltung der Heiz- und Registriereinheit 10 an, bei welcher nur ein Temperaturgeber oder ein Element der optischen Verbindung vorgesehen ist, wobei zwischen dem Temperaturgeber oder dem Element der optischen Verbindung und der Oberfläche der Muster 8 und 9 ein optisches Element (wie etwa Spiegel, Prisma, Linse) angeordnet ist, das so schwingt oder rotiert, daß es eine wechselweise optische Verbindung des Temperaturgebers mit einem vor dem Heizfleck befindlichen Flächenteil des Musters und einem hinter dem Heizfleck befindlichen Flächenteil desselben Musters entlang der Bewegungslinie der Heiz- und Registriereinheit 10 bezüglich der Muster 8 und 9 sicherstellt, wobei das Zeitintervall zwischen den Augenblicken des Überganges von der Verbindung mit dem einen Flächenteil (z.B. dem vor dem Heizfleck befindlichen) zu einem anderen Flächenteil (z.B. hinter dem Heizfleck befindlichen) weniger sein soll als die minimale Abtastzeit nur eines Musters 8 oder 9. Dadurch ist es möglich, von nur einem Geber wechselweise Signale zu gewinnen, welche die Temperatur des Flächenteiles des Musters vor dessen Erhitzung (Anfangstemperatur des Musters) und die Temperatur des erhitzten Flächenteiles (Grenztemperatur nach dem Durchlauf des Heizfleckes) wiedergeben. Auf diese Weise entfällt die Notwendigkeit für das Vorhandensein eines zweiten Temperaturgebers zum Messen der Anfangstemperatur des zu testenden Musters und des Vergleichsmusters 8 und 9. Das elektrische Signal des Temperaturgebers, das dem vor dem Heizfleck befindlichen Flächenteil des Musters zugeordnet ist, kann um die Zeit S/v, wobei S - Abstand zwischen den Mittelpunkten der Abschnitte für die Registrierung der Anfangstemperatur und der Temperatur der erhitzten Oberfläche der Muster 8 und 9 und v - Laufgeschwindigkeit der Heiz- und Registriereinheit 10 bezüglich der Muster 8 und 9 bedeutet, mit Hilfe der Signalzeitverzögerungseinheit 4 verzögert werden.

Die Heiz- und Registriereinheit 10 kann so aufgebaut werden, daß sie eine Oszillation um eine Achse, die zur Plattform 7 parallel und zu einer die Linie der angeordneten Muster 8 und 9 senkrecht zur Oberfläche der Plattform 7 durchlaufende Ebene senkrecht ist, auszuführen vermag. Zur Sicherung einer synchronen Oszillation wird die Heiz- und Registriereinheit 10 insgesamt oder die Heizquelle 11 und/oder die Formierungseinrichtung 24 zum Formieren des Heizfleckes und der Temperaturgeber 12 und/oder 21 oder das Element 25 und/oder 26 der optischen Verbindung der Temperaturgeber 12 und 21 mit der Oberfläche der Muster 8 und 9 mit dem Antrieb eines gemeinsamen Mechanismus zu deren synchroner Oszillation kinematisch gekoppelt.

Die selben konstruktiven Bauteile können mit den Antrieben einzelner Mechanismen für die Oszillation kinematisch verbunden werden, wobei zumindest ein Mechanismus mit einem Steuerblock zur Steuerung der Antribsgeschwindigkeit nach einem Programm, das für die Erhaltung der konstanten Werte für die Abstände zwischen den Mittelpunkten jedes der Abschnitte für die Temperaturregistrierung und dem Mittelpunkt des Heizfleckes sorgt, verbunden ist.

Um eine größere Oberfläche nicht homogener zu testender Muster 8 untersuchen zu können und eine aussagekräftigere Information über deren Wärmeleitfähigkeit zu gewinnen, wird die Heiz- und Registriereinheit 10 am Rahmen 15, welcher quer zur Abtastrichtung des Laserstrahlen an der Oberfläche der Muster 8 und 9 angeordnet ist, entlang dem Rahmen 15 bewegbar angebracht (Figuren 4 und 5). Der Rahmen 15 selbst kann so ausgeführt werden, daß er sich entlang den Längsführungen 14 verlagern kann. Im letzteren Fall mag die Heiz- und Registriereinheit 10 über einen weiteren Temperaturgeber 21 oder ein Element 26 der optischen Verbindung des Temperaturgebers 21 mit der Oberfläche der Muster 8 und 9 verfügen, wobei die Heiz- und Registriereinheit 10 selbst um eine zur Oberfläche der Muster 8 und 9 senkrecht verlaufende Achse schwenkbar ausgeführt werden kann. Die Messung der Wärmeleitfähigkeit von heterogenen Mustern wird durch eine vielfache Abtastung der Muster 8 und 9 durchgeführt, wobei vor jeder Messung der Rahmen in Querrichtung verschoben wird.

Die Vorrichtung kann so realisiert werden, daß die Vergleichsmuster 9 in jedem Meßvorgang nicht benutzt werden. In diesem Fall definiert man nur noch während der vorbereitenden Operation den Parameter $q/(2\pi x_0)$ und gibt ihn in die Ausgangsdatenspeichereinheit 5 ein, in die die Information über die Parameter aus dem Meßverfahren und über die Erhitzungshöhe der Vergleichsmuster 9 eingebracht werden. Dieser Parameter läßt sich ermitteln, indem beispielsweise die Werte q und $x_0$ gemessen werden. Später ermittelt man bei der Erhitzung der zu testenden Muster 8 mittels der Heizquelle 11 die Werte deren überschüssiger Grenztemperaturen $T-T_0$, indem sie in der Informationsregistrier- und -verarbeitungseinheit 2 registriert, die Angaben zu den Werten des Parameters $q/(2\pi x_0)$ benutzt, dieser gemeinsam mit den Angaben zum Wert der überschüssigen Grenztemperaturen $T-T_0$ aus der Ausgangsdatenspeichereinheit 5 in die Informationsregistrier- und - verarbeitungseinheit 2, die eine automatisierte Registrierung der Erhitzungshöhen der zu testenden Muster und der Vergleichsmuster 8 und 9, die Übergabe der Information in die Ausgangsdatenspeichereinheit, die Auswertung der Information und die Berechnung der Wärmeleitfähigkeit der zu testenden Muster 8 besorgt, transportiert werden. Danach errechnet man gemäß der Formel (2), indem darin statt des Parameters $\lambda_R (T_R-T_{R0})$ der Parameter $q/(2\pi x_0)$ eingeset wird, die gesuchten Wärmeleitfähigkeiswerte der zu testenden Muster 8.

In einem anderen Fall der ähnlichen Realisierung der Vorrichtung ermittelt man während der vorbereitenden Einstellung der Vorrichtung auf die Messungen die Erhitzungshöhe der Vergleichsmuster 9 ausgehend von der überschüssigen Grenztemperatur $T_R-TY_{R0}$. Hierbei bestimmt man durch die Abtastung jedes, aus dem Satz stammenden Vergleichsmusters 9 für jedes Vergleichsmuster 9 die Erhitzungshöhe in Form einer überschüssigen Grenztemperatur $T_R-T_{R0}$ und bringt sie in die Ausgangsdatenspeichereinheit 5 ein. Später erhitzt man mit Hilfe der Heizund Registriereinheit 10 die zu testenden Muster 8 und ermittelt deren Erhitzungshöhe in Form von überschüssigen Grenztemperaturen $T-T_0$. Nachher bedient man sich der in der Ausgangsdatenspeichereinheit 5 gespeicherten Information über die Erhitzungshöhen der Vergleichsmuster 9 in Form des Parameters $T_R-T_{R0}$, indem ein Vergleichsmuster 9 ausgewählt wird, das entsprechend der Wärmeleitfähigkeit dem zu testenden Muster 8 am nächsten kommt, und transportiert diese Information aus der Ausgangsdatenspeichereinheit 5 in die Informationsregistrier- und - verarbeitungseinheit 2. Dann errechnet man gemäß der Formel (2) die gesuchten Wärmeleitfähigkeitswerte der zu testenden Muster 8.

Statt der Bestimmung der überschüssigen Grenztemperatur $T_R-T_{R0}$ kann man die Erhitzungshöhe der Vergleichsmuster 9 ausgehend von der dieser entsprechenden Differenz zwischen den Spannungen $U_R-U_{R0}$ oder dem dieser äquivalenten elektrischen Wert bestimmen. Dazu ermittelt man durch die Abtastung jedes aus dem Satz stammenden Vergleichsmusters 9 für jedes davon eine Spannungsdifferenz $U_R-U_{R0}$ (oder den dieser äquivalenten elektrischen Wert) und gibt sie in die Ausgangsdatenspeichereinheit 5 ein. Später erhitzt man mit Hilfe der Heiz- und Registriereinheit 10 die zu testenden Muster 8 und ermittelt deren Erhitzungshöhe durch die Registrierung des Wertes $U-U_0$ oder des diesem äquivalenten elektrischen Weertes für die zu testenden Muster 8. Später benutzt man die in der Ausgangsdatenspeichereinheit 5 gespeicherte Information über die Spannungsdifferenz $U_R-U_{R0}$ für das Vergleichsmuster 9, das nach seiner Wärmeleitfähgkeit dem zu testenden Muster 8 am nächsten kommt, indem diese Information aus der Ausgangsdatenspeichereinheit 5 in die Informationsregistrier- und - verarbeitungseinheit 2 transportiert wird. Dann errechnet man gemäß der Formel (2) die gesuchten Wärmeleitfähigkeitswerte der zu testenden Muster 8.

Die aufgeführten Kombinationen gestatten es, den Heizfleck an der Oberfläche der Muster (und jeweils den Temperaturgeber) abzutasten und somit die Aufgabe für die Bestimmung heterogener Wärmeeigenschaften der zu untersuchenden Substanzen zu bewältigen. Es wird aber auch die Effizienz der Messungen verbessert, weil sich auf der Plattform 7 eine große Menge an zu testenden Mustern 8 (siehe Figuren 2 und 3) zu mehreren Reihen anordnen lassen.

**GEWERBLICHE ANWENDBARKEIT**

Das vorgeschlagene Verfahren und die vorgeschlagene Vorrichtung gestatten es, Messungen der Wärmeleitfähigkeit fester Körper in deren weitem Bereich - von mehr als 0,06 bis 250 W/mK - bei vollem Meßfehler von höchstens 2,5 % und einer Sicherheitswahrscheinlichkeit von 0,95 durchzuführen.
Die hohe Meßgenauigkeit des vorgeschlagenen Verfahrens und der Vorrichtung ermöglicht deren Anwendung für die Kontrolle über die Meßgenauigkeit der in der Praxis eingesetzten Verfahren und Vorrichtungen zur Bestimmung der wärmephysikalischen Daten und für die Herstellung von Vergleichsmustern.

**Patentansprüche**

1. Verfahren zur Schnellbestimmung der Wärmeleitfähigkeit fester Substanzen, beinhaltend eine vorbereitende Einstellung einer Vorrichtung auf die Messungen, eine Erhitzung der Oberfläche der zu testenden Muster (8) während einer relativen Bewegung einer Plattform (7) mit zu testenden Mustern (8) und einer darüber angeordneten Heiz- und Registriereinheit (10) , eine Bestimmung der überschüssigen Grenztemperaturen der Oberfläche der zu testenden Muster (8) an der Verlagerungslinie des Abschnittes für die Temperaturregistrierung an der Oberfläche der zu testenden Muster (8) und eine Bestimmung der Wärmeleitfähigkeit der zu testenden Muster (8) gemäß der Formel $\lambda = \lambda_R (T_R-T_{R0}) / (T-T_0)$ bzw. $\lambda = \lambda_R (U_R-U_{R0}) / (U-U_0)$, wobei $\lambda$ - Wärmeleitfähigkeit des zu testenden Musters, $\lambda_R$ - Wärmeleitfähigkeit des Vergleichsmusters, $T$ und $T_R$ - überschüssige Grenztemperaturen des zu testenden Musters und des Vergleichsmusters, $T_0$ und $T_{R0}$ - Anfangstemperaturen des zu testenden Musters und des Vergleichsmusters, $U_R$ und $U$ - elektrische Signalwerte des Temperaturgebers, die den Erhitzungstemperaturen des zu testenden Musters und des Vergleichsmusters zugeordnet sind, $U_{R0}-U_0$ - elektrische Signalwerte des Temperaturgebers, die den Anfangstemperaturen jeweils des zu testenden Musters und des Vergleichsmusters zugeordnet sind, **dadurch gekennzeichnet, daß** während der vorbereitenden Einstellung der Vorrichtung auf die Messungen die Breite (L) in einem Bereich zwischen deren Mindest- und deren Höchstwert ($L_1$) und ($L_2$) definiert wird, die innerhalb von $0,01<L_1/L_2<1$ ausgewählt werden, die Breite ($L_2$) weniger als der Abstand $x_0$ zwischen dem Mittelpunkt des Abschnittes für die Temperaturregistrierung und dem des Heizfleckes ausgewählt wird, die Breite (1) des Abschnittes für die Temperaturregistrierung in einem Bereich zwischen deren Mindest- und deren Höchstwert ($I_1$) und ($I_2$) festgelegt wird, die innerhalb von $0,001<I_1/I_2<1$ ausgewählt werden, wobei die Breite ($I_2$) kleiner als der Abstand $x_0$ zwischen dem Mittelpunkt des Abschnittes für die Temperaturregistrierung und dem des Heizfleckes ausgewählt wird, wobei innerhalb der Breite des Heizfleckes (L) mehr als 60 % Nutzleistung der Heizquelle (11) in Anspruch genommen werden, während innerhalb der Breite (1) des Abschnittes für die Temperaturregistrierung mehr als 60 % Nutzsignal des Temperaturgebers (12) konzentriert werden, eine gegenseitige Verlagerung der Linien vorgenommen wird, welchen entlang sich an der Oberfläche der Muster der Heizfleck und der Abschnitt für die Temperaturregistrierung bewegen, indem man einen optimalen Abstand dazwischen so lange auswählt, bis eine minimale Auswirkung der Form des Heizfleckes und des Abschnittes für die Temperaturregistrierung auf die Meßergebnisse der Wärmeleitfähigkeit erzielt wird.

2. Verfahren zur Schnellbestimmung der Wärmeleitfähigkeit fester Substanzen nach Anspruch 1, **dadurch gekennzeichnet, daß** während der vorbereitenden Einstellung der Vorrichtung auf die Messungen ein Satz von Vergleichsmustern (9) mit verschiedenen bekannten Wärme- und Temperaturleitfähigkeitswerten gebidet wird, deren Bereich ausgehend von vermutlichen Bereichen der Wärme- und Temperaturleitfähigkeit der zu testenden Mustern (8) ausgewählt wird, daß die Erhitzungshöhen der Vergleichsmuster (9) definiert werden und später bei der Bestimmung der Wärmeleitfähigkeit der zu testenden Muster (8) die Angaben zur Erhitzungshöhe der Vergleichsmuster (9) benutzt werden.

3. Verfahren zur Schnellbestimmung der Wärmeleitfähigkeit fester Substanzen nach Anspruch 1, **dadurch gekennzeichnet, daß** während der vorbereitenden Einstellung der Vorrichtung auf die Messungen ein Satz von Vergleichsmustern (9) mit verschiedenen bekannten Wärme- und Temperaturleitfähigkeitswerten gebildet wird, deren Bereich ausgehend von vermutlichen Bereichen der Wärme- und Temperaturleitfähigkeit der zu testenden Muster (8) gebildet wird, daß während der Bestimmung der Wärmeleitfähigkeit der zu testenden Muster (8) die Erhitzungshöhen der Vergleichsmuster (9) definiert werden und die Angaben zur Erhitzungshöhe der Vergleichsmuster (9) zur Bestimmung der Wärmeleitfähigkeiot der zu testenden Muster (8) benutzt werden.

4. Verfahren zur Schnellbestimmung der Wärmeleitfähigkeit fester Substanzen nach Anspruch 1 und nach einem der Ansprüche 2 bis 3, **dadurch gekennzeichnet, daß** während der vorbereitenden Einstellung der Vorrichtung auf die Messungen Vergleichsmessungen der Wärmeleitfähigkeit anhand der Vergleichsmuster (9) mit gleicher bzw. angenährter Wärmeleitfähigkeit, jedoch mit im wesentlichen abweichender Temperaturleitfähigkeit, durchgeführt werden, und mit Rücksicht auf die Auswirkung der Temperaturleitfähigkeit auf die Meßergebnisse die Parameter des Meßverfahrens verändert werden, indem eine minimale Auswirkung der Temperaturleitfähigkeit auf die Meßergebnisse angestrebt wird und somit die optimalen Parameter der Betriebsweise der Vorrichtung definiert werden.

5. Vorrichtung zur Schnellbestimmung der Wärmeleitfähigkeit fester Substanzen, enthaltend : eine Plattform (7) zur Aufnahme von zu testenden Mustern (8) und Vergleichsmustern (9), eine Heiz- und Registriereinheit (10), die eine Heizquelle (11) zur Erhitzung der Muster (8, 9) und einen Temperaturgeber (12) umfaßt, wobei die Plattform (7) mit den Mustern (8, 9) und die darüber angeordnete Heiz- und Registriereinheit (10) gegeneinander bewegbar angeordnet sind, die Heizquelle (11) und der Temperaturgeber (12) so angeordnet sind, daß sie sich hintereinander entlang der Verlagerungslinie des Abschnittes für die Temperaturregistrierung an der Oberfläche der Muster (8, 9) bewegen können, **dadurch gekennzeichnet, daß** die Heiz- und Registriereinheit (10) eine Formierungseinrichtung (24) zum Formieren des Heizfleckes und ein Element der optischen Verbindung des Temperaturgebers (12) mit der Oberfläche der Muster (8, 9) aufweist, wobei in der Heiz- und Registriereinheit (10) die Heizquelle (11) oder die Formierungseinrichtung (24) zum Formieren des Heizfleckes und der Temperaturgeber (12) oder das Element (25) der optischen Verbindung von der Oberfläche der Muster (8, 9) so beabstandet und unter solch einem Winkel zur Oberfläche der Muster (8, 9) eingestellt ist und die Strahlung der Heizquelle (11) für die Muster (8, 9) und die Strahlung der Muster (8, 9) für den Temperaturgeber (12) so fokussiert oder in bezug auf die Fläche und die Form so eingeschränkt ist, daß die Breite (L) des Heizfleckes in einem Bereich zwischen deren Mindest- und deren Höchstwert ($L_1$) und ($L_2$) erreicht wird, die innerhalb von $0,01 < L_1/L_2 < 1$ ausgewählt sind, die Breite ($L_2$) kleiner als der Abstand ($x_0$) zwischen dem Mittelpunkt des Abschnittes für die Temperaturregistrierung und solchem des Heizfleckes ausgewählt ist, die Breite (1) des Abschnittes für die Temperaturregistrierung in einem Bereich zwischen deren Mindest- und deren Höchstwert ($l_1$) und ($l_2$) erreicht ist, die innerhalb von $0,001 < l_1/l_2 < 1$ ausgewählt sind, wobei die Breite ($l_2$) kleiner als der Abstand ($x_0$) zwischen dem Mittelpunkt des Abschnittes für die Temperaturregistrierung und dem des Heizfleckes ausgewählt ist, innerhalb der Breite (L) des Heizfleckes mehr als 60 % Nutzleistung der Heizquelle (11) in Anspruch genommen werden und innerhalb der Breite (1) des Abschnittes für die Temperaturregistrierung mehr als 60 % Nutzsignal des Temperaturgebers (12) konzentriert sind, die konstruktiven Daten der Heiz- und Registriereinheit (10) davon ausgehend definiert sind, daß der Abstand ($x_0$) zwischen dem Mittelpunkt des Abschnittes für die Temperaturregistrierung und dem des Heizfleckes unter Beachtung der minimalen Länge ($l_{omin}$) des zu testenden Musters und des Vergleichsmusters (8, 9) innerhalb von $(d_1/2 + d_2/2) < x_0 < 2\, l_{0min}$ ausgewählt ist, wobei ($d_1$) - Länge des Heizfleckes längs der Lauflinie, ($d_2$) - Länge des Abschnittes für die Temperaturregistrierung längs der Lauflinie bedeutet, ($l_{0min}$) innerhalb von 1 bis 2000 mm ausgewählt ist, zur Sicherung der erforderlichen Qualität der Ergebnisse die Geschwindigkeit der Relativbewegung der Muster (8, 9) in einem Bereich von 0,1 bis 300 mm/s ausgewählt ist, die Länge ($d_1$) des Heizfleckes ausgehend von der Beziehung $d_1 < l_{min}$ ausgewählt ist und die Länge ($d_2$) des Abschnittes für die Temperaturregistrierung ausgehend von der Beziehung $d_2 < l_{min}$ ausgewählt ist.

6. Vorrichtung zur Schnellbestimmung der Wärmeleitfähigkeit fester Substanzen nach Anspruch 5, **dadurch gekennzeichnet, daß** sie einen Satz von Vergleichsmustern (9) mit verschiedenen bekannten Wärme- und Temperaturleitfähigkeitswerten besitzt, deren Bereich ausgehend von vermutlichen Bereichen der Wärme- und Temperaturleitfähigkeit der zu testenden Muster (8) so ausgewählt wird, daß die Bereiche der Wärme- und Temperaturleitfähigkeit der zu testenden Muster und der Vergleichsmuster (8, 9) miteinander übereinstimmen oder einander nahekommen.

7. Vorrichtung zur Schnellbestimmung der Wärmeleitfähigkeit fester Substanzen nach Anspruch 5 oder 6, **dadurch gekennzeichnet, daß** die Plattform (7) aus einem wärmedämmenden Werkstoff besteht.

8. Vorrichtung zur Schnellbestimmung der Wärmeleitfähigkeit fester . Substanzen nach Anspruch 5 oder 6, **dadurch gekennzeichnet, daß** zwischen den Mustern (8, 9) und der Plattform (7) wärmedämmende Einlagen (16) vorgesehen sind.

**9.** Vorrichtung zur Schnellbestimmung der Wärmeleitfähigkeit fester Substanzen nach Anspruch 5 und einem der Ansprüche 6 bis 8, **dadurch gekennzeichnet, daß** die Heiz- und Registriereinehit (10) einen zusätzlichen Temperaturgeber (21) und/oder ein zusätzliches Element (26) der optischen Verbindung des Temperaturgebers (21) mit der Oberfläche der Muster (8, 9) sowie eine Signalzeitverzögerungseinheit (4) zur Zeitverzögerung des Signals, das der Anfangstemperatur der Muster (8, 9) zugeordnet ist und gegenüber dem Signal verzögert ist, das der Temperatur der erhitzten Oberfläche der Muster (8, 9) zugeordnet ist, aufweist, wobei die Heizquelle (11) oder die Formierungseinrichtung (24) zum Formieren des Heizfleckes in der Heiz- und Registriereinheit (10) zwischen dem hauptsächlichen Temperaturgeber (12) und dem zusätzlichen Temperaturgeber (21) oder zwischen dem hauptsächlichen Element (25) und dem zusätzlichen Element (26) der optischen Verbindung angeordnet ist und die Signalverzögerungszeit durch die Signalzeitverzögerungseinheit (4) gleich S/v ausgewählt ist, wo S- Abstand zwischen den Mittelpunkten der Abschnitte für die Registrierung der Anfangstemperatur und der Temperatur der erhitzten Oberfläche der Muster (8, 9) und v - Laufgeschwindigkeit der Heiz- und Registriereinheit (10) bezüglich der Muster (8, 9) bedeutet.

**10.** Vorrichtung zur Schnellbestimmung der Wärmeleitfähigkeit fester Substanzen nach Anspruch 5 und einem der Ansprüche 6 bis 9, **dadurch gekennzeichnet, daß** die Plattform (7) als Zweikoordinatentisch ausgebildet ist, der in gegenseitig senkrechten Richtungen bewegbar angeordnet ist.

**11.** Vorrichtung zur Schnellbestimmung der Wärmeleitfähigkeit fester Substanzen nach Anspruch 5 und einem der Ansprüche 6 bis 9, **dadurch gekennzeichnet, daß** die Plattform (7) einen Mechanismus (30) für deren Verlagerung in Längsrichtung aufweist und daß die Heiz- und Registriereinheit (10) an einem Wagen befestigt ist, der auf einem Rahmen (15) angeordnet ist, der in Querrichtung bezüglich der Plattform (7) bewegbar ist.

**12.** Vorrichtung zur Schnellbestimmung der Wärmeleitfähigkeit fester Substanzen nach Anspruch 5 und einem der Ansprüche 6 bis 9, **dadurch gekennzeichnet, daß** die Plattform (7) einen Mechanismus (31) für deren Verlagerung in Querrichtung aufweist und daß die Heiz- und Registriereinheit (10) am Wagen befestigt ist, der auf dem Rahmen (15) längs diesem in Längsrichtung bewegbar angeordnet ist.

**13.** Vorrichtung zur Schnellbestimmung der Wärmeleitfähigkeit fester Substanzen nach Anspruch 5 und einem der Ansprüche 6 bis 9, **dadurch gekennzeichnet, daß** bei der ortsfesten Plattform (7) die Heiz- und Registriereinheit (10) am Wagen befestigt ist, der auf dem Rahmen (15) in Längsrichtung entlang dem Rahmen (15) bewegbar angeordnet ist, welcher sich entlang den Führungen (14) in Querrichtung bezüglich der Plattform (7) bewegen kann.

**14.** Vorrichtung zur Schnellbestimmung der Wärmeleitfähigkeit fester Substanzen nach Anspruch 5 und einem der Ansprüche 6 bis 13, **dadurch gekennzeichnet, daß** die Heiz- und Registriereinheit (10) um eine zu der zu erhitzenden Oberfläche der Muster (8, 9) senkrecht verlaufende Achse schwenkbar angeordnet ist.

**15.** Vorrichtung zur Schnellbestimmung der Wärmeleitfähigkeit fester Substanzen nach Anspruch 5 und einem der Ansprüche 6 bis 14, **dadurch gekennzeichnet, daß** die Formierungseinrichtung (24) zum Formieren des Heizfleckes und/oder die Elemente (25, 26) der optischen Verbindung der Temperaturgeber (12, 21) mit der Oberfläche der Muster (8, 9) einen Lichtleiter und/oder eine Linse und/oder einen schwekbaren Spiegel und/oder ein Prisma darstellen.

**16.** Vorrichtung zur Schnellbestimmung der Wärmeleitfähigkeit fester Substanzen nach Anspruch 5 und einem der Ansprüche 6 bis 15, **dadurch gekennzeichnet, daß** die Heiz- und Registriereinheit (10) Oszillationen um eine Achse, welche zur Oberfläche der Plattform (7) parallel und zu einer Ebene, die die Linie der angeordneten Muster (8, 9) senkrecht zur Oberfläche der Plattform (7) durchläuft, senkrecht ist, auszuführen vermag.

**17.** Vorrichtung zur Schnellbestimmung der Wärmeleitfähigkeit fester Substanzen nach Anspruch 5 und einem der Ansprüche 6 bis 16, **dadurch gekennzeichnet, daß** bei der Unterbringung der Heizquelle (11) oder der Formierungseinrichtung (24) zum Formieren des Heizfleckes und des Temperaturgebers (12) oder beider Temperaturgeber (12, 21) oder der Elemente (25, 26) der optischen Verbindung in der Heiz- und Registriereinheit (10) sie alle und/oder im einzelnen so ausgeführt sind, daß sie eine synchrone Oszillation unter Sicherung konstanter Abstände zwischen dem Mittelpunkt des Heizfleckes und den Mittelpunkten der Abschnitte für die Temperaturregistrierung auszuführen vermögen.

**18.** Vorrichtung zur Schnellbestimmung der Wärmeleitfähigkeit fester Substanzen nach Anspruch 5 und einem der Ansprüche 6 bis 8, **dadurch gekennzeichnet, daß** die Plattform (7) in Form eines Laufrades (17) ausgebildet ist, das bezüglich der Heiz- und Registriereinheit (10) rotiert, wobei die zu testenden Muster und die Vergleichsmuster (8, 9) und die Heiz- und Registriereinheit (10) sowohl an der Außenseite des Laufrades, als auch in dessen Innern angeordnet werden können.

19. Vorrichtung zur Schnellbestimmung der Wärmeleitfähigkeit fester Substanzen nach Anspruch 5 und einem der Ansprüche 6 bis 8, **dadurch gekennzeichnet, daß** die Plattform (7) als geschlossenes Band (19) ausgeführt ist, das bezüglich der Heiz- und Registriereinheit (10) rotiert.

20. Vorrichtung zur Schnellbestimmung der Wärmeleitfähigkeit fester Substanzen nach Anspruch 5 und einem der Ansprüche 6 bis 19, **dadurch gekennzeichnet, daß** sie mit einer Ausgangsdatenspeichereinheit (5) versehen ist, die eine Information über den Parameter $q/(2\pi x_0)$, wobei q - Nutzleistung der Heizquelle (11), $x_0$ - Abstand zwischen dem Mittelpunkt des Abschnittes für die Temperaturregistrierung und dem des Heizfleckes bedeutet, oder über die Erhitzungshöhe der Vergleichsmuster (9), die während der vorbereitenden Einstellung der Vorrichtung auf die Messungen definiert wurden, enthält und mit der Informationsregistrier- und -verarbeitungseinheit (2) elektrisch gekoppelt ist.

## Claims

1. A method of rapid determination of heat conduction of solid substances, comprising preliminary adjustment of a device for measuring, heating of the surfaces of the tested specimens (8) in process of travel against each other of the platform (7) with the tested specimens (8) and the heater and monitoring element (10), determination of surplus utmost temperatures of the surfaces of the tested specimens (8) along the line of travel of the segment for recording of temperatures on the surfaces of the tested specimens (8), and determination of heat conduction of the tested specimens (8) according to the formula: $\lambda=\lambda R$ (TR-TRO)/(T-TO) or $\lambda=\lambda R$ (UR-URO)/(U-UO) where $\lambda$ is the heat conduction of the tested specimens, and $\lambda R$ is the heat conduction of the standard specimen, T and TR are the surplus utmost temperatures of the tested specimen and the standard one correspondingly, and TO and TRO are the initial temperatures of the tested specimen and the standard one correspondingly, UR and U are the values of the temperature transducer electric signals assigned to the heat temperatures of the tested specimen and of the standard one correspondingly, URO-U are the values of the temperature transducer electric signals assigned to the initial temperatures of the testing specimen and the standard specimen correspondingly, the characteristic property of which is that in the process of the preliminary adjustment of the device for subsequent measurements, the width (L) is determined in the range between its minimum and maximum values (L1) and (L2), chosen in the limits 0.01<L1/L2<1, the width (L2) is chosen less than the distance xo between the midpoint of the segment for temperature registration and the midpoint of the spot of heating, the width (I) of the segment for temperature registration is determined in the range between its minimum and maximum values (I1) and (I2), which are to be chosen in the limits 0.001<I1/I2 <1, where the width (I2) is taken less than the distance xo between the midpoint of the segment for registration of temperatures and the midpoint of the spot of heating (L); it should be noted, that in the limits of the width of the spot of heating (L) more than 60% of the useful power of the heat source (11) are taken into account, while in the limits of the width (I) of the segment for registration of temperatures, more than 60% of the useful signal of the temperature transducer (12) are concentrated; mutual transfer of the lines is carried out, along which on the surfaces of the specimens the spot of heating and the segment for registration of temperatures are transferred; search of optimum distance between them is continued till influence both of the shape of the spot of heating and the segment for recording of temperatures on the results of heat conduction measurements is minimized.

2. A method of rapid determination of heat conduction of solid substances according to the patent claim 1, the characteristic property of which is that is that in a process of preliminary adjustment of the device for measurements a set of standard specimens (9) with different determined before values of heat conduction and thermal diffusivity, the range of which, proceeding from the assumed ranges of heat conduction and thermal diffusivity of the tested specimens (8), is chosen in such a way that heights of heating of the standard specimens (9) are determined and later on in process of determination of heat conduction of the tested specimens (8), data for heating degree of the standard specimens (9) is used.

3. A method of rapid determination of heat conduction of solid substances according to the patent claim 1, the characteristic property of which is that in a process of preliminary adjustment of the device for measurements, a set of standard specimens (9) with different well-known values of heat conduction and thermal diffusivity is created. Their range, if proceeding from presumable ranges of heat conduction and thermal diffusivity of the testing specimens (8) is formed in such a way that in the process of determination of heat conduction of the testing specimens (8) the degree of heating of the standard specimens (9) and information about the degree of heating of the standard specimens (9) are used for determination of heat conduction of the testing specimens (8).

4. A method of rapid determination of heat conduction of solid substances according to the patent claim 1, the characteristic property of which is that in a process of preliminary adjustment of the device for measurements, standard measurements of heat conduction are carried out on the bases of the standard specimens (9) with identical or almost the same heat conduction, but with significantly different thermal diffusivity and with due regard for the influence of the thermal diffusivity on the results of measurements; the parameters of the method of measurement are changed, while minimum influence of the thermal diffusivity on the results of measurements is achieved, thus optimum parameters of working conditions for the device are defined.

5. A device for rapid determination of heat conduction of solid substances consisting of the following components: platform (7) used for placement of tested specimens (8) and standard specimens (9), heating and recording element (10) which includes a heat source (11) used for heating of the specimens (8, 9) and temperature transducer (12); both the platform (7) with the specimens (8, 9) on it and heating and recording element (10) are placed in such a way that they are moving towards each other, but the heat source (11) and the temperature transducer (12) are located in such a way that they can move one after another along the line of the segment movement for recording of temperatures on the surfaces of the specimens (8, 9), the characteristic property of **which is that** the heating and recording element (10) is provided with a forming device (24) designed for forming of a spot of heating and also with an element of optical communication of the temperature transducer (12) with surfaces of the specimens (8, 9); also in the heating and recording element (10) the heat source (11 ), or the forming device (24) used for forming the spot of heating and the temperature transducer (12) or the element (25) of optical communication are located at such a distance from the surfaces of the specimens (8, 9) and are installed at such an angle to the surfaces of the specimens (8, 9) and radiation of the heat source (11) for the specimens (8, 9) and radiation of the specimens (8, 9) for the temperature transducer (12) are focused in such a way or limited with due regard for surface and shape in such a way that the width (L) of the spot of heat is achieved in the range between its minimum and maximum values (L1) and (L2), which are chosen in the limits 0.01 <L1/L2<1; the width (L2) is taken less than the distance xo between the midpoint of the segment for temperature recording and the midpoint of the spot of heating; the width (I) of the segment for temperature recording is achieved in the range between its minimum and maximum values (I1) and (I2), which are to be chosen in the limits 0.001<I1/I2 <1, where the width (I2) is taken less than the distance xo between the central point of the segment for recording of temperatures and the central point of the spot of heating; in the limits of the width (L) of the spot of heating more than 60% of the useful power of the heat source (11) are taken into account; in the limits of the width (I) of the segment for recording of temperatures more than 60% of the useful signal of the temperature transducer (12) are concentrated; design parameters of the heating and recording element (10) are determined proceeding from the assumption that the distance xo between the midpoint of the segment for recording of temperatures and the midpoint of the spot of heating is selected with due regard for minimum length (lomin) of the tested specimen and the standard one (8, 9) in the limits (d1/2+d2/2)<xo<2lomin where (d1) is the length of the spot of heating along the central line, (d2)- the length of the segment for recording of temperature along the central line (lomin) and is selected in the limits from 1 to 2 000; to provide the required quality of the results the speed of, relative movement of the specimens (8, 9) is selected in the range from 0.1 to 300 mm/s; the length (d1) of the spot of heating is selected proceeding from the relation d1<lmin and the length (d2) of the segment for registration of temperatures is selected proceeding from the relation d2<I min.

6. A device for rapid determination of heat conduction of solid substances according to the article claim 5, the characteristic property of which is that it has a set of standard specimens (9) with different known values with of thermal diffusivity and heat conduction, the range of which, proceeding from presumable ranges of thermal diffusivity and heat conduction of the tested specimens (8), is selected in such a way that the ranges of thermal diffusivity and heat conduction of the tested and standard specimens (8, 9) coincide with each other or are almost identical.

7. A device for rapid determination of heat conduction of solid substances according to the article claims 5 or 6, the characteristic property of which is that the platform (7) is made of a heat-insulating material.

8. A device for rapid determination of heat conduction of solid substances according to the article claims 5 or 6, the characteristic property of which is that between the specimens (8, 9) and the platform (7) heat-insulating interlayers (16) are stipulated.

9. A device for rapid determination of heat conduction of solid substances according to the article claim 5 or one of the article claims 6-8, **the characteristic property of which is that** the heating and recording element (10) is provided with an additional temperature transducer (21) and/or additional element (26) of the optical communication of the temperature transducer (21) with the surfaces of the specimens (8, 9), and an element of signal delay (4) for delay of the signal which is assigned to the initial temperature of the specimens (8, 9) and is inhibited in comparison with the signal assigned to the temperature of the heated surfaces of the specimens (8, 9); the heat source (11) or the forming device (24) for forming the spot of heat in the heating and recording element (10) is located between the main temperature transducer (12) and the additional temperature communication (21) or between the main element (25) and additional element (26) of the optical communication; signal delay is selected with the help of a signal delay element (4) which is equal to S/v, where S is the distance between the midpoints of segments for recording of initial temperature and temperature of the heated surfaces of the specimens (8, 9); v is the speed movement of the heating and recording element (10) relative to the specimens (8, 9).

10. A device for rapid determination of heat conduction of solid substances according to the article claim 5 or one of the article claims 6-9, the characteristic property of which is that the platform (7) is none other than a two-coordinate table moving in mutually vertical directions.

11. A device for rapid determination of heat conduction of solid substances according to the article claim 5 or one of the article claims 6-9, **the characteristic property of which is that** the platform (7) has a mechanism (30) moving it in longitudinal direction; the heating and recording element (10) is fixed on a dolly located on a frame which moves in lateral direction relative to the platform (7).

12. A device for rapid determination of heat conduction of solid substances according to the article claim 5 or one of the article claims 6-9, the characteristic property of which is that the platform (7) has a mechanism (31) to move it in lateral direction; the heating and recording element (10) is fixed on a dolly which moves along the frame (15) in longitudinal direction.

13. A device for rapid determination of heat conduction of solid substances according to the article claim 5 or one of the article claims 6-9, **the characteristic** property of which is that on the immovable platform (7) the heating and recording element (10) is fixed on a dolly which moves on the frame (15) in longitudinal direction along the frame (15) which can move along the guides (14) in lateral direction relative to the platform (7).

14. A device for rapid determination of heat conduction of solid substances according to the article claim 5 or one of the article claims 6-13, the characteristic property of which is that the heating and recording element (10) is rotating around an axis located vertically relative to the heated surfaces of the specimens (8, 9).

15. A device for rapid determination of heat conduction of solid substances according to the article claim 5 or one of the article claims 6-14, the characteristic property of which is that the forming device (24) for forming the spot of heating and/or elements (25, 26) of optical communication of the temperature transducers (12, 21) with the surfaces of the specimens (8, 9) is a light conductor and/or a lens and/or rotating mirror and/or a prism.

16. A device for rapid determination of heat conduction of solid substances according to the article claim 5 or one of the article claims 6-15, the characteristic property of which is that the heating and recording element (10) can vibrate around an axis which is parallel to the platform (7) surface and vertical relative to the plane located along the line of specimens (8, 9) vertically relative to the plane of the platform (7).

17. A device for rapid determination of heat conduction of solid substances according to the article claim 5 or one of the article claims 6-16, **the characteris**tic property of which is that when locating the heating source (11) or the forming device (24) used for forming of the spot of heating and the temperature transducer (12) or of both temperature transducers (12, 21) or elements (25, 26) of optical connection in the heating and recording element (10) all of them and/or every one separately are designed in such a way that can vibrate preserving constant distances between the central point of the spot of heating and midpoints of the segments for temperature recording.

18. A device for rapid determination of heat conduction of solid substances according to the article claim 5 or one of the article claims 6-8, the characteristic property of which is that the plat form (7) is made as a running wheel (17) which rotates relative to the heating and recording element (10); the tested and standard specimens (8, 9) and heating and recording element (10) may be located either on the external side of the running wheel or on the internal one.

**19.** A device for rapid determination of heat conduction of solid substances according to the article claim 5 or one of the article claims 6-8, the characteristic property of which is that the platform (7) is made as a closed belt conveyer (19), which rotates relative to the heating and recording element (10).

**20.** A device for rapid determination of heat conduction of solid substances according to the article claim 5 or one of the article claims 6-19, the characteristic **property of which is that** it is provided with a device for storing of initial data (5) which contains information about parameters q/2πxo, where: q is useful power of the source of heating (11), xo - distance between the central point of the segment for temperature recording and the midpoint of the spot of heating, or information about the height of heating of the standard specimens (9), which was determined in process of the preliminary adjustment of the device for measurements, and has electric connection with the element used for recording and processing the information (2).

**Revendications**

**1.** Le procédé de la détermination rapide de la conductibilité de la chaleur des matières solides envisageant un réglage préliminaire du dispositif afin de mesurer, la chauffe de la surface des échantillons soumis à l'épreuve (8) pendant le déplacement de la plate-forme (7) avec des échantillons soumis à l'épreuve (8) et l'élément chauffant enregistreur (10) l'un vis-à-vis de l'autre, la détermination des températures excédentes critiques de la surface des échantillons soumis à l'épreuve (8) sur la ligne du déplacement du segment afin d'enregistrer les températures à la surface des échantillons soumis à l'épreuve (8) et afin de déterminer la conductibilité de la chaleur des échantillons soumis à l'épreuve (8) d'après la formule suivante: $\lambda = \lambda_R (T_R - T_{R0}) / (T - T_0)$ ou $\lambda = \lambda_R (U_R - U_{R0}) / (U - U_0)$ ou $\lambda$ est la conductibilité de la chaleur des échantillons soumis à l'épreuve; $\lambda_R$ est la conductibilité de la chaleur de l'échantillon de référence; $T$ et $T_R$ sont des températures excédentes critiques d'un échantillon soumis à l'épreuve et d'un échantillon de référence; $T_0$ et $T_{R0}$ sont les températures initiales d'un échantillon soumis à l'épreuve et d'un échantillon de référence; $U_R$ et $U$ sont les valeurs du signal électrique du capteur des températures attribuées aux températures de la chauffe de l'échantillon soumis à l'épreuve et de l'échantillon de référence; $U_{R0}$ et $U$ sont les valeurs du signal électrique du capteur des températures attribuées aux températures initiales de l'échantillon soumis à l'épreuve et de l'échantillon de référence respectivement, **se distinguant par le fait que** lors du réglage préliminaire du dispositif pour le mesurage la largeur (L) se détermine dans l'éspace entre ses valeurs minimum et maximum ($L_1$) et ($L_2$) qui seront choisies dans les limites $0,01 < L_1 / L_2 < 1$, la largeur ($L_2$) sera choisie moins une distance $x_0$ entre le point médian du segment pour l'enregistrement des températures et le point médian du spot de la chauffe, la largeur (1) du segment pour l'enregistrement des températures sera établie dans l'éspace entre ses valeurs minimum et maximum ($I_1$) et ($I_2$) qui seront choisies dans les limites $0,001 < I_1 / I_2 < 1$, la largeur choisie ($I_2$) doit être moins grande que la distance $x_0$ entre le point médian du segment pour l'enregistrement des températures et le point médian du spot de la chauffe, il est à noter que dans l'éspace de la la largeur du spot de la chauffe (L) on prend en considération 60% et plus de la puissance utile de la source de la chauffe (11 ), tandis que dans l'éspace de la la largeur (I) du segment pour l'enregistrement des températures 60% et plus du signal util du capteur des températures (12) est concentré; le déplacement mutuel des lignes se réalise le long desquelles le spot de la chauffe et le segment pour l'enregistrement des températures se déplacent à la surface des échantillons et une distance optimum entre eux sera choisie jusqu'à l'atteinte de l'influence minimale de la forme du spot de la chauffe et du segment pour l'enregistrement des températures sur les résultats du mesurage de la conductibilité de la chaleur.

**2.** Le procédé de la détermination rapide de la conductibilité de la chaleur des matières solides d'après la formule 1 **se distinguant par le fait que** lors du réglage préliminaire du dispositif pour le mesurage se crée un ensemble des échantillons de référence (9) avec des valeurs connues différentes de la conductibilité de la chaleur et des températures, dont la bande sera choisie à partir des valeurs éventuelles des bandes de la conductibilité de la chaleur et des températures des échantillons soumis à l'épreuve (8), de façon permettant de déterminer les sommets de la chauffe des échantillons de référence (9); plus tard, lors de la détermination de la conductibilité de la chaleur des échantillons soumis à l'épreuve (8), on aura recours aux données nécessaires afin de déterminer le sommet de la chauffe des échantillons de référence (9).

**3.** Le procédé de la détermination rapide de la conductibilité de la chaleur des matières solides d'après la formule 1 **se distinguant par le fait que** lors du réglage préliminaire du dispositif pour le mesurage se crée un ensemble des échantillons de référence (9) avec des valeurs connues différentes de la conductibilité de la chaleur et des températures, dont la bande sera choisie, en partant des valeurs éventuelles des bandes de la conductibilité de la chaleur et des températures des échantillons soumis à l'épreuve (8), de façon que lors de la détermination de

**EP 1 162 452 B1**

la conductibilité de la chaleur des échantillons soumis à l'épreuve (8) on peut déterminer les sommets de la chauffe des échantillons de référence (9) et les données sur les sommets de la chauffe des échantillons de référence (9) seront utilisées afin de déterminer la conductibilité de la chaleur des échantillons soumis à l'épreuve (8).

**4.** Le procédé de la détermination rapide de la conductibilité de la chaleur des matières solides d'après la formule 1 **se distinguant par le fait que** lors du réglage préliminaire du dispositif pour le mesurage les dimensionnements de référence de la conductibilité de la chaleur s'effectuent à partir des échantillons de référence (9) avec la même conductibilité de chaleur ou la conductibilité de chaleur pareille, mais avec une conductibilité des températures substantiellement différente et, compte tenu un impact de la conductibilité des températures sur les résultats du mesurage, les paramètres du procédé du mesurage seront changés; en même temps on atteint une influence minimale de la conductibilité des températures sur les résultats du mesurage, ce que permet de déterminer les paramètres optimum du régime d'exploitation du dispositif.

**5.** Le dispositif pour la détermination rapide de la conductibilité de la chaleur des matières solides comportant: la plate-forme (7) pour l'installation des échantillons soumis à l'épreuve (8) et des échantillons de référence (9), l'élément chauffant enregistreur (10) constitué de la source de la chauffe (11) afin de chauffer des échantillons (8,9) et du capteur de la température (12); il est à noter que la plate-forme (7) avec des échantillons (8,9) et l'élément chauffant enregistreur (10) seront déplacés à la rencontre l'une de l'autre, tandis que la source de la chauffe (11) et le capteur de la température (12) sont placés de façon les permettant de suivre l'un l'autre le long de la ligne du déplacement du segment pour l'enregistrement des températures à la surface des échantillons (8,9), se distinguant par le fait que l'élément chauffant enregistreur (10) a un dispositif de formation (24) permettant de former le spot de la chauffe et l'élément de la connexion optique du capteur des températures (12) avec la surface des échantillons (8,9); il est à noter que la source de la chauffe (11 ) ou le dispositif de formation (24) permettant de former le spot de la chauffe et le capteur des températures (12) dans l'élément chauffant enregistreur (10) ou l'élément de la connexion optique (25) seront éloignés de la surface des échantillons (8,9) à une distance et sous un angle, ainsi que le rayonnement de la source de la chauffe (11) envers les échantillons (8,9) et les émissions des échantillons (8,9) envers le capteur des températures (12) seront focalisés ou restreints d'une telle façon, compte tenu la surface et la forme, que la largeur (L) du spot de la chauffe soit placée dans l'éspace entre ses valeurs minimums et maximums $(L_1)$ et $(L_2)$ qui seront choisies dans les limites $0,01 < L_1/L_2 < 1$, la largeur choisie $(L_2)$ doit être moins grande que la distance $(x_0)$ entre le point médian du segment pour l'enregistrement de la température et le point médian du spot de la chauffe; la largeur (I) du segment pour l'enregistrement de la température sera placée dans l'espace entre ses valeurs minimums et maximums $(l_1)$ et $(l_2)$ qui sont choisies dans l'éspace entre $0,001 < l_1/l_2 < 1$, la largeur choisie $(l_2)$ doit être moins grande que la distance $(x_0)$ entre le point médian du segment pour l'enregistrement des températures et le point médian du spot de la chauffe; il est à noter que dans l'éspace de la la largeur du spot de la chauffe (L) on prend en considération 60% et plus de la puissance utile de la source de la chauffe (11 ), tandis que dans l'éspace de la largeur (I) du segment pour l'enregistrement des températures 60% et plus du signal util du capteur des températures (12) est concentré; les données constructives concernant l'élément chauffant enregistreur (10) seront déterminées à partir du fait que la distance $(x_0)$ entre le point médian du segment pour l'enregistrement des températures et le point médian du spot de la chauffe sera choisie en prenant en considération la longueur minimale $(l_{0min})$ des échantillons soumis à l'épreuve et de référence (8,9) dans les limites $(d_1/2 + d_2/2) < x_0 < 2 \ l_{0min}$, où $(d_1)$ est la longueur du spot de la chauffe le long de la ligne médiane, $(d_2)$ est la longueur du segment pour l'enregistrement de la température le long de la ligne médiane, $(l_{0min})$ sera choisie dans les limites entre 1 et 2000; afin de garantir une qualité nécessaire des résultats une vitesse choisie du déplacement relatif des échantillons (8,9) sera entre 0,1 et 300 mm/s, une longueur $(d_1)$ du spot de la chauffe sera choisie à partir du rapport $d_1 < l_{min}$ et une longueur $(d_2)$ du segment pour l'enregistrement de la température sera choisie à partir du rapport $d_2 < l_{min}$.

**6.** Le dispositif pour la détermination rapide de la conductibilité de la chaleur des matières solides d'après la formule 5, **se distinguant par le fait qu'** il a un ensemble des échantillons de référence (9) avec des valeurs connues différentes de la conductibilité de la chaleur et des températures, dont la bande sera choisie à partir des valeurs éventuelles des bandes de la conductibilité de la chaleur et des températures des échantillons soumis à l'épreuve (8); cette bande des valeurs sera choisie de telle façon que les bandes de la conductibilité de la chaleur et des températures des échantillons soumis à l'épreuve et celles des échantillons de référence (8,9) coïncident et sont presque équivalentes.

**7.** Le dispositif pour la détermination rapide de la conductibilité de la chaleur des matières solides d'après la formule 5 ou 6, **se distinguant par le fait que** la plate-forme (7) est faite en un matériau calorifuge.

8. Le dispositif pour la détermination rapide de la conductibilité de la chaleur des matières solides d'après la formule 5 ou 6, se **distinguant par le fait que** les couches intermédiaires calorifuges (16) sont prévues entre les échantillons (8,9) et la plate-forme (7).

9. Le dispositif pour la détermination rapide de la conductibilité de la chaleur des matières solides d'après la formule 5 et une des formules 6-8, **se distinguant par le fait que** l'élément chauffant enregistreur (10) a un capteur supplémentaire de la température (21) et/ou un élément supplémentaire (26) de la connexion optique du capteur de la température (21) avec la surface des échantillons (8,9), aussi bien qu'un élément du retard provisoire du signal (4) afin de faire retarder provisoirement le signal attribué à la température initiale des échantillons (8,9) qui est retardé par rapport au signal attribué à la température de la surface chauffée des échantillons (8,9); il est à noter que la source de la chauffe (11 ) ou le dispositif de formation (24) permettant de former le spot de la chauffe dans l'élément chauffant enregistreur (10) est placée entre le capteur principal de la température (12) et le capteur supplémentaire de la température (21) ou entre l'élément principal (25) et l'élément supplémentaire (26) de la connexion optique et le temps du retard du signal sera choisi à l'aide de l'élément du retard provisoire du signal (4), soit S/v, où $S$ est la distance entre les points médians des segments pour l'enregistrement de la température initiale et la température de la surface chauffée des échantillons (8,9) et $v$ est la vitesse de l'élément chauffant enregistreur (10) par rapport aux échantillons (8,9).

10. Le dispositif pour la détermination rapide de la conductibilité de la chaleur des matières solides d'après la formule 5 et une des formules 6-9, **se distinguant par le fait que** la plate-forme (7) se compose de la table à deux coordonnées qui se déplace dans les directions mutuellement verticales.

11. Le dispositif pour la détermination rapide de la conductibilité de la chaleur des matières solides d'après la formule 5 et une des formules 6-9, **se distinguant par le fait que** la plate-forme (7) dispose d'un mécanisme (30) pour son déplacement dans la direction longitudinale et que l'élément chauffant enregistreur (10) est fixé sur un chariot placé sur un châssis se déplaçant dans la direction transversale par rapport à la plate-forme (7).

12. Le dispositif pour la détermination rapide de la conductibilité de la chaleur des matières solides d'après la formule 5 et une des formules 6-9, se distinguant **par le fait que** la plate-forme (7) dispose d'un mécanisme (31 ) pour son déplacement dans la direction transversale et que l'élément chauffant enregistreur (10) est fixé sur un chariot placé sur un châssis (15) se déplaçant le long de lui dans la direction longitudinale.

13. Le dispositif pour la détermination rapide de la conductibilité de la chaleur des matières solides d'après la formule 5 et une des formules 6-9, **se distinguant par le fait que** sur la plate-forme (7) l'élément chauffant enregistreur (10) est fixé sur un chariot se déplaçant sur un châssis (15) dans la direction longitudinale le long de ce châssis (15) qui peut se déplacer le long des glissières (14) dans la direction transversale par rapport à la plate-forme (7).

14. Le dispositif pour la détermination rapide de la conductibilité de la chaleur des matières solides d'après la formule 5 et une des formules 6-13, **se distinguant par le fait que** l'élément chauffant enregistreur (10) est placé tournant autour un pivot qui passe verticalement vers la surface chauffée des échantillons (8,9).

15. Le dispositif pour la détermination rapide de la conductibilité de la chaleur des matières solides d'après la formule 5 et une des formules 6-14, **se distinguant par le fait que** le dispositif de formation (24) permettant de former le spot de la chauffe et/ou et les éléments (25,26) de la connexion optique des capteurs de la température (12,21) avec la surface des échantillons (8,9) représente un conduit de lumière et/ou une lentille et/ou un miroir tournant et/ou un prisme.

16. Le dispositif pour la détermination rapide de la conductibilité de la chaleur des matières solides d'après la formule 5 et une des formules 6-15, **se distinguant par le fait que** l'élément chauffant enregistreur (10) peut produire des vibrations autour du pivot placé parallèlement à la surface de la plate-forme (7) et verticalement à la surface qui passe le long de la ligne des échantillons (8,9) disposés verticalement à la surface de la plate-forme (7).

17. Le dispositif pour la détermination rapide de la conductibilité de la chaleur des matières solides d'après la formule 5 et une des formules 6-9, **se distinguant par le fait que** lors de l'arrangement de la source de la chauffe (11) ou le dispositif de formation (24) permettant de former le spot de la chauffe et le capteur des températures (12) ou les deux capteurs des températures (12,21) ou les éléments (25,26) de la connexion optique dans l'élément chauffant enregistreur (10); tous ces dispositifs ou chacun d'eux séparément sont faits de façon les permettant de produire la vibration en maintenant les distances stables entre le point médian du spot de la chauffe et les points médians des segments pour l'enregistrement de la température.

18. Le dispositif pour la détermination rapide de la conductibilité de la chaleur des matières solides d'après la formule 5 et une des formules 6-8, se distinguant par le fait que sur la plate-forme (7) est faite en forme d'un galet de translation (17) qui tourne par rapport à l'élément chauffant enregistreur (10), alors que des échantillons soumis à l'épreuve et des échantillons de référence (8,9) et l'élément chauffant enregistreur (10) peuvent être mis tant à l'extérieur du galet de translation qu'au-dedans de lui.

19. Le dispositif pour la détermination rapide de la conductibilité de la chaleur des matières solides d'après la formule 5 et une des formules 6-8, **se distinguant par le fait que** sur la plate-forme (7) est faite en forme d'une bande transporteuse fermée (19) qui tourne par rapport à l'élément chauffant enregistreur (10).

20. Le dispositif pour la détermination rapide de la conductibilité de la chaleur des matières solides d'après la formule 5 et une des formules 6-19, **se distinguant par le fait qu'** il est muni de la mémoire afin de retenir des données initiales (5) qui comporte l'information sur les paramètres $q/2\pi x_0$, ou q est la puissance utile de la source de chauffe (11), $x_0$ est la distance entre le point médian du segment pour l'enregistrement de la température et le point médian du spot de la chauffe électriquement liée avec l'élément d'enregistrement et de traitement des données, aussi bien que l'information sur le sommet de la chauffe des échantillons de référence (9) qui a été déterminé lors du réglage préliminaire du dispositif pour le mesurage (2).

Fig. 1

Fig. 2

Fig. 3

Fig. 4

Fig. 5

Fig. 6

Fig. 7

Fig. 8

Fig. 9